# EUROPÄISCHE PATENTSCHRIFT

(11) **EP 1 080 161 B1**
(45) Veröffentlichungstag und Bekanntmachung des Hinweises auf die Patenterteilung: **13.11.2002**
(21) Anmeldenummer: 99910363.3
(22) Anmeldetag: 18.03.1999
(51) Int. Cl.: C09K 5/06, F28D 20/02

(54) **MIKROWELLENAKTIVIERBARE LATENTWÄRMESPEICHERKÖRPER**
MICROWAVE-ACTIVATED LATENT HEAT ACCUMULATOR BODIES
ELEMENTS ACCUMULATEURS DE CHALEUR LATENTE POUVANT ETRE ACTIVES PAR DES HYPERFREQUENCES

(30) Priorität: 29.04.1998 DE 19819171; 19.05.1998 DE 19822541; 10.08.1998 DE 19836048
(43) Veröffentlichungstag der Anmeldung: 07.03.2001
(73) Patentinhaber: Schümann Sasol GmbH, 20457 Hamburg (DE)
(72) Erfinder: FIEBACK, Klaus, 10245 Berlin (DE); GUTBERLET, Helmut, D-24558 Henstedt-Ulzburg (DE); BÜTTNER, Dirk, Carsten, D-12247 Berlin (DE)
(74) Vertreter: Müller, Enno, Dipl.-Ing.
(86) Internationale Anmeldenummer: EP9901809
(87) Internationale Veröffentlichungsnummer: WO99055795

(56) Entgegenhaltungen:
- WO-A-95/08601
- WO-A-97/35942
- WO-A-98/53264
- US-A- 5 630 961

## Beschreibung

Die Erfindung betrifft einen Latentwärmespeicherkörper mit einem Latentwärmespeichermaterial auf Paraffinbasis und Verfahren zur Herstellung eines Latentwärmespeicherkörpers.

Latentwärmespeicherkörper dienen bekanntlich zur zeitlichen Entkoppelung von Wärme- bzw. Kälteerzeugung und nachfolgendem Wärme- bzw. Kälteverbrauch. Sie ermöglichen eine Steigerung der Effektivität, indem das in ihnen enthaltene Latentwärmespeichermaterial bei einem durch Wärmezufuhr hervorgerufenen Phasenübergang, bspw. von fest nach flüssig, Wärme speichert und bei einem zeitlich entkoppelten, entgegengerichteten Phasenübergang Wärme abzugeben vermag. Die zeitliche Entkoppelung von Wärmezu- und abfuhr ermöglicht lange, durchgängige Laufzeiten von Wärme- bzw. Kälteerzeugern mit hohen Wirkungsgraden und geringen An-, Abfahr- und Stillstandskosten. Latentwärmespeicherkörper werden beispielsweise in Anlagen zur Wärmeerzeugung aus Solarenergie oder aus fossilen Energieträgern verwendet, darüber hinaus aber auch in Kühlkreisläufen. Zum Stand der Technik wird beispielsweise auf die PCT/EP 93/03346 und auf die PCT/EP98/01956, sowie auf die darin genannten weiteren Druckschriften verwiesen. Insbesondere ist aus der PCT/EP98/01956 ein Latentwärmekörper mit in einem Aufnahmeräume aufweisenden Trägermaterial aufgenommenen Latentwärmespeichermaterial auf Paraffinbasis bekannt. Bei dem bekannten Latentwärmekörper wird darauf abgestellt, daß das Trägermaterial aus einzelnen Trägermaterialelementen beispielsweise durch Verklebung zusammengesetzt ist, wobei jedenfalls zwischen den Trägerelementen kapillarartige Aufnahmeräume für das Latentwärmespeichermaterial ausgebildet sind. Diese Anordnung führt zu einem einfach herstellbaren und hochwirksamen Latentwärmekörper mit einem hohen Wärmespeichervermögen, der auch im erwärmten Zustand eine ausreichende Strukturfestigkeit aufweist und dessen Trägermaterial sich weitestgehend selbsttätig mit dem Latentwärmespeichermaterial füllt. Den Vorteilen des vorgenannten und weiterer bekannter Latentwärmespeicherkörper stehen in Abhängigkeit von den gewählten Abmessungen und Verwendungsbereichen unerwünscht lange Zeitintervalle gegenüber, die zur Zufuhr bzw. Speicherung von Wärmeenergie erforderlich sind. Zu lange Aufheizzeiträume ergeben sich besonders dann, wenn die Wärmeenergie ausschließlich mittels Wärmeleitung von der Oberfläche in das Innere eines Latentwärmespeicherkörpers erfolgen muß und Wärmeleitbarrieren vorhanden sind, die beispielsweise zwischen lose aneinandergrenzenden Teilkörpern innerhalb eines Latentwärmespeicherkörpers bestehen können.

Es wurde daher bereits der Versuch unternommen, Mikrowellen energetisch in Latentwärmespeicherkörper mit einem großen Anteil Paraffin als Latentwärmespeichermaterial einzukoppeln und darüber aufzuheizen. Bekanntlich besitzen Mikrowellen die Fähigkeit, zu erwärmende Körper mit sehr hoher Geschwindigkeit zu durchdringen und darin enthaltene mikrowellenaktive Stoffe durch Anregung von Molekülschwingungen mittels Bewegungsenergie zu erwärmen, ohne daß dazu Wärmeleitung erforderlich wäre. Durch Aufheizung eines Körpers mittels Mikrowellenstrahlung können daher grundsätzlich erheblich kürzere Aufheizintervalle als bei einer Wärmeübertragung mittels Wärmeleitung realisiert werden. Eine grundlegende Schwierigkeit besteht jedoch darin, daß neben mikrowellenaktiven Stoffen in technischen Anwendungen häufig auch mikrowellenpassive Stoffe, beispielsweise Latentwärmespeichermaterial auf Paraffinbasis, von Bedeutung sind, deren Moleküle durch die Mikrowellenstrahlung nicht oder für die technische Anwendung ungenügend erwärmt werden können. Während inzwischen die mikrowellenaktive Eigenschaft von Wasser und einigen Kohlenstoffverbindungen als bekannt vorauszusetzen ist, treten in vielen Bereichen der Technik Probleme durch eine mangelnde oder nicht vorhersehbare Mikrowellenaktivität von zahlreichen weiteren Stoffen, z.B. bei Baumwolle, einigen Kunststoffen, Holz und Paraffinen auf. Zur Lösung dieses Problems gibt man diesen Stoffen Mikrowellenantennen bei, etwa als Kohlenstoff, OH-Gruppen in Form von Ruß, Glycerin oder Alkoholen. So wird z.B. in der eingangs genannten PCT/EP98/01956 vorgeschlagen, daß der Latentwärmekörper einen mikrowellenaktiven Stoff, insbesondere aus einer oder mehreren der Werkstoffgruppen Gläser, Kunststoffe, Mineralstoffe, Metalle, Kohle oder Keramik enthält. Es wird dadurch erreicht, daß je nach Anordnung bzw. Verteilung des mikrowellenaktiven Stoffes im Latentwärmekörper zahlreiche Heiz- bzw. Wärmenester unter dem Einfluß von Mikrowellenstrahlung entstehen, die ihre Wärmeenergie aufgrund der bestehenden Temperaturdifferenz an das angrenzende, überwiegend mikrowellenpassive Latentwärmespeichermaterial auf Paraffinbasis abgeben. Durch die verkürzten Wärmeleitwege wird damit prinzipiell eine Beschleunigung des Aufheizvorganges erreicht.

Bei der Zugabe der Mikrowellenantennen ist allerdings im allgemeinen nachteilig, daß diese Beigaben aus Nutzungssicht häufig nicht wünschenswert sind, erhöhte Aufmerksamkeit bei ihrem Einsatz verlangen, sich unwiderruflich verbrauchen können oder etwa die Gefahr von Entmischungen und damit gefährlicher Konzentrationsunterschiede besteht, wodurch es zu örtlichen Überhitzungen und zum "Durchbrennen" eines Materialverbundes aus mikrowellenpassivem und mikrowellenaktiven Material kommen kann. Allgemein wird daher die Nutzung und der Anwendungsumfang vieler mikrowellenpassiver Materialien bisher durch Zugabe von mikrowellenaktiven Stoffen eingeschränkt.

Auch bei Latentwärmespeicherkörpern, beispielsweise bei Wärmekissen oder Platten, mit einem großen Anteil Paraffin als Latentwärmespeichermedium ist es bisher nicht zu einer befriedigenden Lösung gekommen, mit der es ermöglicht wird, Mikrowellen energetisch einzukoppeln und darüber den Latentwärmespeicherkörper aufzuheizen. Bisherige Versuche wurden über die vorgenannten Schwierigkeiten hinaus dadurch erschwert, daß sich in einer hermetisch geschlossenen Hülle einer Paraffinpackung mit einem zum Beispiel flüssigen mikrowellenaktiven Material ein hoher Dampfdruck aufbauen kann, mikrowellenaktive Stoffe sich oft nur mit einem großen technischen Aufwand (dosiertes Extrudieren) getrennt vom Paraffin mikrogekapselt anlagern lassen, was damit wiederum relativ große Anteile gegenüber dem Paraffin notwendig macht. Auch die so angelagerten mikrowellenaktiven Zusätze können sich jedoch im Laufe der Zeit irreversibel verflüchtigen bzw. die Neigung zum Auftreten besitzen. Unterschiedliche Schichten des mikrowellenaktiven und/oder des mikrowellenpassiven Materials ergeben wiederum erhebliche Temperaturschwankungen. In der Summe bestehen daher immer noch große technische Probleme hinsichtlich der Herstellung, der Gebrauchseigenschaften und der Funktionssicherheit von mit mikrowellenaktiven Stoffen dotierten mikrowellenpassiven Materialien.

Aus der US-PS 5,630,961 ist als Trägermaterial für ein Latentwärmespeichermaterial Calciumsilikat bekannt.
Calciumsilikat ist ein Adsorbens. Dies bedeutet, dass das Latentwärmespeichermaterial sich nur äußerlich, an der Oberfläche der Calciumsilikatpartikel, anlagern kann. Diese Calciumsilikatpartikel sind zudem sehr klein. 94% der Partikel sind kleiner als 44 µm.

Es ist Aufgabe der vorliegenden Erfindung, einen durch Mikrowellen aufheizbaren Latentwärmespeicherkörper mit einem Latentwärmespeichermaterial auf Paraffinbasis anzugeben, der leicht herstellbar ist, vorteilhafte Gebrauchseigenschaft hat und eine höhere Funktionssicherheit gewährleistet. Ein weiterer Aufgabenteil besteht darin, ein vereinfachtes Herstellungsverfahren für einen Latentwärmespeicherkörper mit einem Latentwärmespeichermaterial auf Paraffinbasis anzugeben.

Der erste Aufgabenteil wird erfindungsgemäß durch einen Latentwärmespeicherkörper mit den Merkmalen von Anspruch 1 gelöst, zu dem vorteilhafte Ausgestaltungen in den Ansprüchen 2 bis 20 angegeben sind. Bei dem erfindungsgemäßen Latentwärmespeicherkörper mit einem Latentwärmespeichermaterial auf Paraffinbasis ist darauf abgestellt, daß der Latentwärmespeicherkörper ein hygroskopisches Material enthält. Das hygroskopische Material besitzt die ausgeprägte Fähigkeit, aus seiner Umgebung Feuchtigkeit aufzunehmen und diese an sich zu binden.

Als hygroskopische Stoffe lassen sich besonders gut Calciumchlorid (CaCl₂ * 6 H₂O), Eisenchlorid (FeCl₃), Kupfersulfat (CuSO₄ * 5 H₂O), Magnesiumchlorid (MgCl₂ * 6 H₂O), Pottasche (Kaliumcarbonat, K₂CO₃) und Kiesel- bzw. Silicagel sowie zahlreiche weitere Stoffe einsetzen.

Bei der Feuchtigkeit kann es sich insbesondere um Flüssigkeiten auf Wasserbasis, selbstverständlich auch um reines Wasser, handeln, das von einem hygroskopischen Material auch in Dampfphase, d.h. in gasförmiger Form, aus der Umgebung aufgenommen werden kann. Das hygroskopische Verhalten beruht teilweise auf Adsorption und neben weiteren - häufig untergeordneten - Effekten bei feinporigen Materialien häufig auch auf Kapillarkondensation. Darüber hinaus kann hygroskopisches Verhalten auch darauf beruhen, daß die Feuchtigkeit als Salzlösung (Kristallwasser) im hygroskopischen Material enthalten ist. Die Kapillarkondensation ist dann von Bedeutung, wenn der durch die Gibbs-Thomson-Gleichung näherungsweise beschriebene Dampfdruck über einer in den Poren bzw. Kapillaren eines Körpers konkav gekrümmtem Flüssigkeitsoberfläche soweit abgesenkt wird. daß er kleiner als der Dampfdruck in dem umgebenden Gas wird. Das im Latentwärmespeicherkörper enthaltene hygroskopische Material bewirkt mit der Aufnahme von Feuchtigkeit, insbesondere auf Wasserbasis, erfindungsgemäß eine selbständige Dotierung eines vergleichsweise mikrowellenpassiven Latentwärmespeichermaterials mit einem hochgradig mikrowellenaktiven Material, dessen hoher Wirkungsgrad auf dem extrem ausgebildeten Dipolcharakter von Wasser beruht. Der Einbezug von hygroskopischem Material ermöglicht, daß der erfindungsgemäße Latentwärmespeicherkörper, bei dem es sich z.B. um ein Paraffin enthaltendes Wärmekissen handeln kann, gut in einem haushaltsüblichen Mikrowellengerät aufheizbar ist. Weiterhin werden mit dem hygroskopischen Material die bisher bei einem angestrebten Einsatz von Wasser als mikrowellenaktivem Material bestehenden Schwierigkeiten überwunden, die in seiner extremen Paraffinphobität (Entmischung) seiner leichten Flüchtigkeit und der damit verbundenen Dampfdruckerhöhung bei höheren Temperaturen bestanden.

Ein weiterer Vorteil besteht darin, daß die mikrowellenaktive Feuchtigkeit nach einer jeweiligen Erwärmung, bzw. Anwendung des Latentwärmespeicherkörpers immer wieder zu denjenigen Stellen im Latentwärmespeicherkörper zurückkehrt, an denen das hygroskopische Material im Latentwärmespeicherkörper enthalten ist und daß das hygroskopische Material zu keiner Entmischung aus dem Latentwärmespeichermaterial neigt. Es wird damit zusätzlich zu einer selbständigen Regenerierung des Latentwärmespeicherkörpers durch Feuchtigkeitsaufnahme als weiterer Vorteil erreicht, daß von der Feuchtigkeit dabei auch die ursprünglich vorgesehene Verteilung im Latentwärmespeicherkörper immer wieder reproduzierbar eingenommen wird, so daß keine Entmischung und keine unerwünschten Konzentrationsunterschiede möglich sind. Infolgedessen wird auch eine lokale Überhitzung des Latentwärmespeicherkörpers bzw. ein "Durchbrennen" wirkungsvoll verhindert, wobei auch bei einer Fehlbedienung keine Explosions- oder Brandgefahr besteht. Insgesamt wird daher auch die Funktionssicherheit des Latentwärmespeicherkörpers gegenüber bekannten Ausführungen erheblich erhöht.

Weitere Vorteile des erfindungsgemäßen Latentwärmespeicherkörpers liegen darin, daß auch die Wärmeleitfähigkeit aufgrund des Kristallwassergehaltes und des feinstverteilten Kondensatwassers erheblich erhöht wird, so daß erstmals größere Schichtdicken sinnvoll realisierbar sind. Im Hinblick auf die hygroskopischen Eigenschaften braucht außerdem kein Vakuum gezogen zu werden, und auslaufende Leckagen sind nicht zu befürchten. Der erfindungsgemäße Latentwärmespeicherkörper zeichnet sich darüber hinaus durch eine besondere Vielseitigkeit aus, da neben der bevorzugten Aufheizung durch Mikrowellen alternativ oder zusätzlich auch eine Aufheizung nach konventionellen Verfahren, beispielsweise in einem Wasserbad oder in einem Ofen geschehen kann. Ein zusätzlicher Vorteil einer Aufheizung durch Mikrowellen besteht darin, daß dabei nur ein minimaler Energieaufwand notwendig wird, da sich die Mikrowellenenergie hervorragend in die in dem hygroskopischen Material gebundene Feuchtigkeit, insbesondere auch in Kristallwasser, einkoppeln läßt. Es kommt hinzu, daß zahlreiche hygroskopische Stoffe sehr preiswert und außerdem nur minder bis ungiftig sind und in vielen Fällen keine chemische Veränderung des Latentwärmespeichermaterials auf Paraffinbasis bewirken.

In einer bevorzugten möglichen Ausgestaltung ist der Latentwärmespeicherkörper in einer dampfdiffusionsdurchlässigen Umhüllung aufgenommen, bei der es sich z.B. um eine Folie handeln kann, die an ihren Rändern bzw. Verbindungsbereichen und/oder innerhalb von Flächenbereichen dampfdiffusionsdurchlässige Öffnungen zur Umgebung des Latentwärmespeicherkörpers aufweist. Bei diesem "offenen System" besteht ein Dampfaustausch zwischen dem Inneren des Latentwärmespeicherkörpers und seiner Umgebung, so daß in der Umgebung vorhandene Feuchtigkeit von dem im Latentwärmespeicherkörper enthaltenen hygroskopischen Material aufgenommen werden kann. Wird der Latentwärmespeicherkörper mit Mikrowellen bestrahlt, führt dies zu einer Erwärmung und anschließenden Verdampfung der im hygroskopischen Material gespeicherten mikrowellenaktiven Feuchtigkeit, insbesondere von Wasser. Der erhitzte Dampf steht an seinen Entstehungsorten in unmittelbarem und unverzüglichem Wärmeaustausch mit dem angrenzenden Wärmespeichermaterial, wodurch dieses ebenfalls innerhalb kurzer Zeit erwärmt werden kann. Bei der Verdampfung der aus dem hygroskopischen Material heraustretenden Feuchtigkeit kommt es zur Volumenzunahme der mikrowellenaktiven Feuchtigkeit, so daß auch das Volumen des in der Umhüllung eingeschlossenen Latentwärmespeicherkörpers zunimmt. Der dadurch in der Umhüllung gebildete Druck läßt einen Teil des Dampfes aus der dampfdiffusionsdurchlässigen Umhüllung in die Umgebung entweichen, so daß auf vorteilhafte Weise eine Zerstörung der Umhüllung durch einen unzulässig hohen Innendruck vermieden wird. Der erwärmte Latentwärmespeicherkörper kann nun seiner vorgesehenen Verwendung zugeführt werden. Der Feuchteverlust des Latentwärmespeicherkörpers durch den zumindest anteiligen Dampfaustritt wird dadurch selbständig ausgeglichen, daß das im Latentwärmespeicherkörper enthaltene hygroskopische Material mit fortschreitender Abkühlung des Latentwärmespeicherkörpers die noch vorhandene Feuchtigkeit an sich bindet, worauf es durch ein Dampfdruckgefälle zum Nachströmen von Umgebungsfeuchte durch die dampfdiffusionsdurchlässigen Öffnungen der Umhüllung in das Innere des Latentwärmespeicherkörpers kommt, bis sich ein Gleichgewicht einstellt, indem erneut eine hohe Feuchtigkeitsmenge in dem hygroskopischen Material gespeichert ist. In einer weiteren Variante kann der Latentwärmespeicherkörper auch in einer dampfdiffusionsundurchlässigen Umhüllung, beispielsweise in einer Kunststoff- oder Aluminiumfolie, aufgenommen sein (geschlossenes System). Dabei kann eine dampfdruckbedingte Zerstörung beispielsweise durch entsprechende Materialreserve der Umhüllung, die auch aus einem dehnbaren Material bestehen kann, und/oder durch eine geeignet abgestimmte Feuchtigkeitsmenge im Latentwärmespeicherkörper verhindert werden. Des weiteren besteht auch die Möglichkeit, daß das hygroskopische Material seinerseits in einer dampfdiffusionsdurchlässigen Umhüllung aufgenommen ist. Das hygroskopische Material kann dabei mit dieser Umhüllung von dem angrenzenden Latentwärmespeichermaterial dampfdiffusionsdurchlässig abgetrennt sein, so daß seine Oberfläche nicht durch verflüssigtes Paraffin passiviert werden kann.

Der erfindungsgemäße Latentwärmespeicherkörper kann Kapillarräume aufweisen, die Wege zu dem hygroskopischen Material öffnen. Beispielsweise besteht die Möglichkeit, daß das Latentwärmespeichermaterial auf Paraffinbasis eine durch Additive modifizierte Erstarrungsstruktur, insbesondere mit hohlkegelartigen Hohlräumen aufweist, wie diese in der PCT/EP93/03346 beschrieben sind.

Hierdurch ist es ermöglicht, das Ansprechverhalten des Latentwärmespeichermaterials bei Wärmezufuhr entscheidend zu verbessern. Das Latentwärmespeichermaterial auf Paraffinbasis nimmt hierdurch eine gleichsam poröse Struktur an. Bei Wärmezufuhr können leichter schmelzende Bestandteile des Latentwärmespeichermaterials durch die im Material selbst gegebenen Hohlstrukturen hindurch fließen. Es kann sich, gegebenenfalls auch hinsichtlich vorhandener Lufteinschlüsse eine Art Mikro-Konvektion einstellen. Es ergibt sich auch eine hohe Durchmischungswirksamkeit. Im weiteren ist auch eine Vorteilhaftigkeit hinsichtlich des Ausdehnungsverhaltens bei Phasenänderung gegeben. Das Strukturadditiv ist in dem Latentwärmespeichermaterial vorzugsweise homogen gelöst. Im einzelnen haben sich Strukturadditive wie solche auf Basis von Polyalkylmetacrylaten (PA-MA) und Polyalkylacrylaten (PAA) als Einzelkomponenten oder in Kombination bewährt. Ihre kristallmodifizierende Wirkung wird dadurch hervorgerufen, daß die Polymermoleküle in die wachsenden Paraffinkristalle mit eingebaut werden und das Weiterwachsen dieser Kristallform verhindert wird. Aufgrund des Vorliegens der Polymermoleküle auch in assoziierter Form in der homogenen Lösung in Paraffin, können auf die speziellen Assoziate Paraffine aufwachsen. Es werden Hohlkegel gebildet, die nicht mehr zur Bildung von Netzwerken befähigt sind. Aufgrund der synergistischen Wirkungsweise dieses Strukturadditives auf das Kristallisationsverhalten der Paraffine wird eine Hohlraumbildung und damit eine Verbesserung der Durchströmbarkeit des Wärmespeichermediums Paraffin (beispielsweise für in dem Latentwärmespeicherkörper eingeschlossene Luft oder Wasserdampf oder für verflüssigte Phasen des Latentwärmespeichermaterials, d. h. des Paraffins selbst) gegenüber nicht derartig compoundierten Paraffinen erreicht. Allgemein eignen sich als Strukturadditive auch Ethylen, Vinylcetat-Copolymere (E, VA), Ethylen-Propylen-Copolymere(OCP), Dien-Styrol-Copolymere sowohl als Einzelkomponenten als auch im Gemisch sowie alkylierte Naphthaline (Paraflow). Der Anteil der Strukturadditive fängt bei einem Bruchteil von Gewichtsprozenten, realistischerweise etwa bei 0.01 Gewichtsprozent an und zeigt insbesondere bis zu einem Anteil von etwa einem Gewichtsprozent spürbare Veränderungen im Sinne einer Verbesserung. Die Kapillarräume erleichtern einerseits dem hygroskopischen Material die Aufnahme von Feuchtigkeit, insbesondere aus der Umgebung des Latentwärmespeicherkörpers und begünstigen andererseits nach der Verdampfung der Feuchtigkeit den Wärmeübergang auf das Latentwärmespeichermaterial durch eine verbesserte Durchströmung des Latentwärmespeicherkörpers mit dem erhitzten Dampf. Darüber ist zur Vergleichmäßigung und Beschleunigung der Erwärmung des Latentwärmespeicherkörpers bevorzugt, daß das hygroskopische Material im Latentwärmespeicherkörper verteilt angeordnet ist.

Im Hinblick auf die Möglichkeit einer gleichmäßigen und schnellen Durchströmung des Latentwärmespeicherkörpers mit der mikrowellenaktiven Feuchtigkeit beträgt der Massenanteil des hygroskopischen Materials in einem Latentwärmespeicherkörper bevorzugt 5 % oder weniger, wodurch ebenfalls die gewünschten kurzen Aufheizzeiten erreicht werden können. Durch die geringen Zusätze und ebenfalls durch die geringe erforderliche Menge an mikrowellenaktiver Feuchtigkeit ergibt sich somit keine wesentliche Reduzierung des Anteils an Latentwärmespeichermaterial auf Paraffinbasis, so daß die Volumen- bzw. gewichtsspezifische Wärmespeicherkapazität nicht nennenswert beeinträchtigt wird. Gemäß einer bevorzugten Weiterbildung des Latentwärmespeicherkörpers enthält dieser hygroskopisches Material unterschiedlicher Wirksamkeit. Sehr stark hygroskopische Materialien können als "Wasserzieher" eingesetzt werden und in Kombination mit weniger stark hygroskopischen Stoffen, die schwerer aufgeheizt werden können, als Produkt-, Verhaltens- und Temperaturregler in einem Latentwärmespeicherkörper eingesetzt werden. Die Kombination von hygroskopischem Material mit unterschiedlicher Wirksamkeit ermöglicht es beim Erhitzen über einen durch die Materialzusammensetzung beinflußbaren Temperaturbereich hinweg Feuchtigkeit zu verdampfen. Gegenüber einer schlagartigen Verdampfung resultiert daraus neben einer höheren Funktionssicherheit auch eine günstigere Wärmeübertragung auf das Latentwärmespeichermaterial.

Gemäß einer weiteren vorteilhaften Ausgestaltung des Latentwärmespeicherkörpers kann dieser ein Trägermaterial mit Latentwärmespeichermaterial aufnehmenden kapillarartigen Aufnahmeräumen aufweisen. Es ist dabei zunächst an eine derartige Ausbildung der Kapillaren gedacht, bei der die Aufnahmeräume eine selbstansaugende Wirkung insbesondere hinsichtlich des Latentwärmespeichermaterials ausüben. Ein solcher Latentwärmespeicherkörper zeichnet sich auch bei verflüssigtem Latentwärmespeichermaterial durch eine gewünschte Formbeständigkeit aus, wobei ein Ausschwitzen des Latentwärmespeichermaterials verhindert wird. Im Hinblick auf die zusätzlich vorhandene mikrowellenaktive, nicht mit dem Latentwärmespeichermaterial mischbare Feuchtigkeit, insbesondere Wasser, wird weiterhin eine Separierung beider Komponenten entgegengewirkt. Außerdem wirken die Körper aus Trägermaterial und Latentwärmespeichermaterial aufgrund ihrer hohen spezifischen Oberfläche mit den Öffnungen der kapillaren Aufnahmeräume als Kondensationskerne bzw. -keime für die Dampfphase des erhitzten mikrowellenaktiven Materials, so daß der Wärmeübergang vom Dampf auf das Latentwärmespeichermaterial begünstigt wird. Es besteht darüber hinaus die Möglichkeit, die kapillarartigen Aufnahmeräume auch auf eine selbstansaugende Wirkung hinsichtlich der mikrowellenaktiven Feuchtigkeit abgestimmt auszubilden.

Bevorzugt ist vorgesehen, daß der Latentwärmespeicherkörper eine Anzahl von Trägermaterialeinzelkörpern enthält, die eine plattenartige oder kornartige Gestalt aufweisen können. Hinsichtlich der Verwendung von Trägermaterial mit Latentwärmespeichermaterial aufnehmenden kapillarartigen Aufnahmeräumen wird weiterhin auf die PCT/EP98/01956 verwiesen. Bei dem Trägermaterial kann es sich außerdem um handelsübliche Verpackungsfüllstoffe, Anfsaugmittel für Chemikalien, insbesondere für Öl, Brandschutzmittel, Verdickungsmittel, Trägerstoffe - insbesondere für chemische Abfälle - sowie um Mikrovliesstoffe oder Aufsaugmatten handeln. Hierzu wird insbesondere auf die von der Rench Chemie GmbH in unterschiedlichen Spezifizierungen beispielsweise unter den geschützten Bezeichnungen Rench-Rapid 'R', Rench Rapid 'G', Perleen 222, Perleen 444, Rapon 5090, Rapon 5092 und Rapon 5093 angebotenen Produkte verwiesen. Durch die hohe Eigenrohdichte geeigneter Ölbindemittel entsteht ein zusätzlich sensibler Wärmespeichereffekt.

Weiterhin ist bevorzugt, daß das hygroskopische Material flocken-, körner- oder granulatartig ausgebildet ist oder als Pulver im Latentwärmespeicher enthalten ist. Insbesondere besteht die Möglichkeit, daß das hygroskopische Material auf einem oder mehreren der Trägermaterialeinzelkörper angeordnet ist. Neben einer Anordnung auf der Trägermaterialeinzelkörper-Oberfläche ist auch an eine Anordnung im Inneren der Trägermaterialeinzelkörper gedacht. In einer weiter bevorzugten Ausführung sind der Trägermaterialeinzelkörper und die Umhüllung des Latentwärmespeicherkörpers von einem gasenthaltenden Raum beabstandet angeordnet. Dieser gasenthaltende Raum kann insbesondere dazu dienen, aus der Umgebung mikrowellenaktive Feuchtigkeit an das Latentwärmespeichermaterial heranzuführen und kann des weiteren als Feuchtigkeitsspeicher und/oder als Ausdehnungsgefäß vorgesehen sein.

Alternativ oder in Kombination mit einer Anordnung des hygroskopischen Materials auf einem Trägermaterialeinzelkörper kann das hygroskopische Material auf einem sich flächig oder räumlich im Latentwärmespeicherkörper erstreckenden Verteilkörper angeordnet sein. Ein derartiger Verteilkörper kann Kapillarräume aufweisen, die für die mikrowellenaktive Feuchtigkeit Wege zu dem hygroskopischen Material öffnet und dadurch die Feuchtigkeit im Latentwärmespeicherkörper verteilt. Es ist dabei beispielsweise an eine Aufgabenteilung gedacht, derzufolge der Kapillarräume aufweisende Verteilkörper eine Verteilung der mikrowellenaktiven Feuchtigkeit in flüssiger Form im Latentwärmespeicherkörper bewirkt, so daß sie von dem daran bevorzugt ebenfalls verteilt angeordneten hygroskopischen Material aufgenommen werden kann. Nach einem gebrauchsbedingten Verdampfen und Austritt der Feuchtigkeit aus dem hygroskopischen Material und/oder unmittelbar aus dem Verteilkörper mit Kapillarräumen erfüllt das hygroskopische Material die Aufgabe, die mikrowellenaktive Feuchtigkeit in gleichmäßiger Verteilung möglichst vollständig wieder zurückzubinden. Soweit z.B. aufgrund eines Dampfaustrittes in die Umgebung keine vollständige Zurückbindung möglich ist, wird das Feuchtedefizit durch ein Nachströmen von mikrowellenaktiver Flüssigkeit durch die sich verzweigenden Kapillaren des Verteilkörpers ausgeglichen. Die Kapillaren des Verteilkörpers sind daher in ihrer Gestaltung vorzugsweise auf einen möglichst großen Durchsatz an mikrowellenaktiver Flüssigkeit ausgerichtet, während die Kapillaren des hygroskopischen Materials zur Verstärkung der hygroskopischen Eigenschaft vorzugsweise so ausgestaltet bzw. bemessen sind, daß sie auch eine Kapillarkondensation von mikrowellenaktivem Dampf bewirken. Weiterhin besteht auch die Möglichkeit, daß der Verteilkörper selbst aus einem hygroskopischen Material ausgebildet ist. Es ist weiter daran gedacht, daß die Umhüllung des Latentwärmespeicherkörpers eine verschließbare Öffnung aufweist, durch die besonders im Fall einer dampfdiffusionsundurchlässigen Umhüllung bedarfsweise eine Zu- oder Abgabe von Feuchtigkeit beeinflußt werden kann. In einer speziellen Ausgestaltung erstreckt sich der Verteilkörper mit den Kapillarräumen für die mikrowellenaktive Flüssigkeit von der verschließbaren Öffnung der Umhüllung ausgehend in den Latentwärmespeicherkörper hinein. Eine vorteilhafte Ausgestaltung des Verteilkörpers berücksichtigt, daß die darin enthaltenen Kapillarräume nur auf die mikrowellenaktive Flüssigkeit, nicht dagegen auf das Latentwärmespeichermaterial eine selbstansaugende Wirkung ausüben, so daß eine Verstopfung der Kapillaren mit Latentwärmespeichermaterial verhindert wird. Dies kann aufgrund der unterschiedlichen Viskositäten von Latentwärmespeichermaterial auf Paraffinbasis und von Wasser zum Beispiel durch geeignete Abstimmung der Abmessungen der Kapillarräume oder auf andere zweckmäßige Weise erreicht werden. Diesbezüglich ist auch auf eine entsprechende, nur hinsichtlich der mikrowellenaktiven Feuchtigkeit kapillarwirksamen Ausbildung der Poren des hygroskopischen Materials zu achten. Ergänzend oder alternativ kann der hygroskopische Verteilkörper auch mit einer für das Latentwärmespeichermaterial undurchlässigen Umhüllung umgeben sein. Durch die Umhüllung wird somit ebenfalls ein Eindringen von Latentwärmespeichermaterial in Poren des hygroskopischen Materials und deren Verstopfung verhindert. Insbesondere kann eine derartige Ausbildung Vorteile bieten, bei der sich das hygroskopische Material dochtartig innerhalb der Umhüllung erstreckt, wobei die Umhüllung beispielsweise aus einer Folie mit einer sehr geringen Wandstärke bestehen kann.Allerdings besitzen die Körper aus hygroskopischem Material insofern eine Selbstreinigungskraft, als daß sie zumindest bei einer noch nicht dampfdiffusionsdichten Umhüllung aus Latentwärmespeichermaterial von sich aus wieder Wasser aufnehmen und sich beim nächsten Einsatz wieder freischmelzen.

In weiterer Einzelheit ist auch bevorzugt, daß dem Latentwärmespeichermaterial ein Zusatz zugesetzt wird, welcher zur Dickflüssigkeit führt. Es kann hier ein übliches Thixotropiemittel verwendet werden. Selbst im erwärmten Zustand, in welchem üblicherweise eine Verflüssigung des Latentwärmespeichermaterials gegeben ist, ist dann noch eine Schwerflüssigkeit, im Sinne einer gallertartigen Konsistenz, gegeben. Selbst bei einem unbeabsichtigten Durchtrennen von mit Latentwärmespeichermaterial auf Paraffinbasis getränktem Trägermaterial kommt es noch nicht oder nicht in wesentlichem Ausmaß zu einem Auslaufen von Latentwärmespeichermaterial.

Es besteht auch die Möglichkeit, daß das Latentwärmespeichermaterial auf Paraffinbasis einen Anteil an Mineralöl und/oder an Polymeren und/oder Elastomeren enthält. Die Kautschuke und/oder Elastomere führen vorrangig zu einer höheren Flexibilität, die auch im verfestigten Zustand des Latentwärmespeichermaterials erhalten bleiben kann und die beispielsweise bei Sitzkissen oder Bandagen Vorteile bietet. Sie sind vorzugsweise mit weniger als 5% Anteil enthalten. Wenn die Polymere keine Elastomere sind, führen sie zu keiner Erhöhung der Flexibilität und verhindern nur, gegebenenfalls zusätzlich, ein Auslaufen. Vorzugsweise handelt es sich um hochausraffiniertes Mineralöl. Beispielsweise ein Mineralöl, welches man üblicherweise auch als Weißöl bezeichnet. Bei den Polymeren handelt es sich um vernetzte Polymere, die durch Copolymerisation hergestellt sind. Die vernetzten Polymere bilden mit dem Mineralöl durch Ausbildung eines dreidimensionalen Netzwerkes oder durch ihre physikalische Vernetzung (Knollenstruktur) eine gelartige Struktur. Diese Gele besitzen eine hohe Flexibilität bei gleichzeitiger Stabilität gegenüber einwirkenden mechanischen Kräften. Das Paraffin wird im flüssigen Zustand in diese Struktur eingeschlossen. Bei dem Phasenwechsel, der Kristallisation, werden die entstehenden Paraffinkristalle von der Gelstruktur umgeben, so daß sich eine flexible Gesamtmischung ergibt.

In einer möglichen Anwendung kann ein Latentwärmespeichermaterial, das Paraffin mit einer Schmelztemperatur von 50° Celsius und ein Copolymer mit einer Schmelztemperatur von 120° Celsius enthält, bis zu einer Temperatur von 125° Celsius aufgeheizt werden, so daß zunächst eine gleichmäßige Durchmischung beider Komponenten erreicht wird und die dünnflüssige Mischung vom Trägermaterial aufgrund der darin wirksamen Kapillarkräfte bis zur vollständigen Sättigung aufgenommen werden kann. Bei einer nachfolgenden Abkühlung werden die entstehenden Paraffinkristalle von dem Copolymer umgeben. Bei einer z. B. denkbaren oberen Betriebstemperatur des Latentwärmekörpers von 80° Celsius wird nur der Paraffinanteil, nicht dagegen das Copolymer, verflüssigt. Vorteilhaft wird dadurch erreicht, daß das Paraffin nicht aus dem Copolymer austreten kann und mit ihm im Trägermaterial verbleibt. Für die Erfindung ist wesentlich, daß das gewünschte Paraffinrückhaltevermögen in dem Latentwärmekörper bei Verwendung des oben beschriebenen Trägermaterials bereits bei einem Massenanteil von weniger als 5 % des Copolymers am Latentwärmespeichermaterial erzielt werden kann.

Hinsichtlich der Polymere werden beispielsweise Styrol-Butadien-Styrol (SBS), Styrol-Isopren-Styrol (SIS) oder Styrol-Ethylen-Butylen-Styrol (S-EB-S) eingesetzt. Insbesondere wird hier auf ein Mittel zurückgegriffen, was unter der Handelsmarke "KRATON G" bekannt ist, angeboten von Shell-Chemicals. Da "Kraton G" hydrierte Copolymere enthält, weist dieses Mittel eine hohe thermische Stabilität auf und eignet sich daher gut für die hier vorgeschlagene Anwendung. Die "Kraton-G"-Kautschuke sind bekanntlich kompartibel mit paraffinischen und naphtenischen Ölen. Den Triblock-Copolymeren wird zugeschrieben, daß sie mehr als das zwanzigfache ihres Gewichtes an Öl aufnehmen können und damit Produkte herstellbar sind, deren Konsistenz - abhängig von der Sorte und Konzentration des Kautschukes - in weiten Grenzen variiert werden kann. Optional gemischte Diblock-Polymere enthalten den AB-Typ, beispielsweise Styrol-Ethylenpropylen (S-EP) und Styrol-Isopren (SI). Die ABA-Struktur von Kraton-Kautschuk- Molekülen enthält Polystrol-Endblöcke und elastomere Mittelblöcke. Weiterhin können aber auch weitere bekannte Kraton-Abwandlungen angewendet werden. Dieses Block-Copolymer eignet sich vorzugsweise als Verdicker zur Erhöhung der Viskosität bzw. als Flexibilisator zur Erhöhung der Elastizität. Bei Kraton G handelt es sich um einen thermoplastischen Kunststoff, wobei mehrere Typen von Copolymeren der Kraton G-Reihe existieren, die sich in ihrem strukturellen Aufbau unterscheiden. Die Kraton-Kautschuk-Polymere besitzen elastomere Eigenschaften und weisen eine ungewöhnliche Kombination aus hoher Festigkeit und niedriger Viskosität auf. Sie weisen außerdem eine Molekularstruktur auf aus linearen Diblock-, Triblock- und Radial-Copolymeren, deren Molgewicht variiert und die ein unterschiedliches Verhältnis von Styrol- zu Elastomeranteil aufweisen. Von den bekannten Kraton G-Typen können vorzugsweise die als G 1650, G 1651 und G 1654 bekannten Typen Anwendung finden. Jedes Molekül des Kraton-Kautschuks kann aus Blocksegmenten von Styrol-Monomer-Einheiten und Kautschuk-Monomer- und/oder Comonomer-Einheiten bestehen.

Weiterhin können auch Copolymere, wie beispielsweise HDPE (High Density Polyethylen), PP (Polypropylen) oder HDPP (High Density Polypropylen) verwendet werden.

Es besteht außerdem die Möglichkeit, dem Latentwärmespeichermaterial auf Paraffinbasis eine Mischung hinzuzugeben, die zumindest verschiedene, aus der Gruppe der Diblock-Copolymere, friblock-Copolymere, Radialblock-Copolymere und Multiblock-Copolymere ausgewählte Copolymere enthält, wobei die Mischung bevorzugt zumindest ein Diblock-Copolymer und zumindest ein Triblock-Copolymer enthält und das Diblock-Copolymer und das Triblock-Copolymer Segmente aus Styren-Monumereinheiten und Kautschuk-Monomereinheiten aufweisen können.

Wesentlich ist, daß sich die erwähnten Additive einerseits homogen in dem Paraffin verteilen bzw. das Paraffin diese Zusätze homogen durchsetzt und andererseits keine chemische Wechselwirkung zwischen den Zusätzen und dem Paraffin eintritt. Weiter ist von besonderer Bedeutung, daß die Auswahl dahingehend getroffen ist, daß praktisch keine Dichteunterschiede zwischen den Additiven und dem Paraffin gegeben sind, so daß auch keine physikalische Entmischung hierdurch auftreten kann.

Der zweite Aufgabenteil wird durch die Angabe eines Herstellungsverfahrens mit den Merkmalen nach Anspruch 21 gelöst, zu denen vorteilhafte Vorgehensweisen in den Unteransprüchen 22 bis 27 angegeben sind.

Es wird dazu mit Anspruch 21 ein Verfahren angegeben zur Herstellung eines Latentwärmespeicherkörpers mit in einem Aufnahmeräume aufweisenden Trägermaterial aufgenommenen Latentwärmespeichermaterial auf Paraffinbasis, bei dem das Latentwärmespeichermaterial verflüssigt wird und in verflüssigter Form an selbstansaugende kapillarartige Aufnabmeräume des Trägermaterials herangeführt wird, wobei darauf abgestellt wird, daß das verflüssigte Latentwärmespeichermaterial an eine Mehrzahl von Trägermaterialeinzelkörpern eines Latentwärmespeicherkörpers herangeführt wird. Das Heranführen kann beispielsweise dadurch erfolgen, daß das Trägermaterial in das verflüssigte Latentwärmespeichermaterial über das Trägermaterial gegossen wird. Insbesondere für die Herstellung von größeren Latentwärmespeicherkörpern empfiehlt es sich, in größerer Stückzahl vorgefertigte Trägermaterialeinzelkörper mit gegenüber dem Latentwärmespeicherkörper geringeren Abmessungen mit Latentwärmespeichermaterial zu tränken. Gegenüber der bekannten, umgekehrten Verfahrensweise, bei der zunächst ein zusammenhängender Trägermaterialkörper beliebiger Größe mit Latentwärmespeichermaterial getränkt wird und daraus erst im getränkten Zustand Latentwärmespeicherteilkörper herausgetrennt werden, wird mit dem erfindungsgemäßen Verfahren eine schnellere und damit kostengünstigere Tränkung des Trägermaterials realisiert. Wie bei dem bekannten Verfahren mit umgekehrter Arbeitsreihenfolge besteht die Möglichkeit, für einen Latentwärmespeicherkörper viele kleinere Teil- bzw. Einzelkörper Teilkörper nahezu beliebiger Formen und/oder Größen zu verwenden, so daß mit dem getränkten Trägermaterial praktisch unbegrenzte Gestaltungsmöglichkeiten für Latentwärmespeicherkörper bestehen. Darüber hinaus kann das erfindungsgemäße Verfahren besonders vorteilhaft auch zur Herstellung eines mikrowellenaktiven Latentwärmespeicherkörpers mit einem Latentwärmespeichermaterial auf Paraffinbasis eingesetzt werden, indem ein hygroskopisches Material an der Oberfläche des Trägermaterials angelagert wird. Praktisch kann dazu so vorgegangenen werden, daß das zu verwendende Latentwärmespeichermaterial auf Paraffinbasis zunächst zu einer Schmelze aufbereitet wird, deren Viskosität durch Zugabe von Additiven, beispielsweise von Kraton mit einer Konzentration von bis zu zehn Prozent, vorzugsweise von bis zu zwei Prozent, eingestellt und dabei bevorzugt erhöht werden kann. Diese Schmelze kann in einem folgenden Verfahrensschritt an selbstansaugende kapillare Aufnahmeräume der Trägermaterialeinzelkörper herangeführt werden, indem letztere beispielweise in die Schmelze eingetaucht werden oder die Schmelze über die Latentwärmespeichereinzelkörper gegossen wird, wobei zusätzlich die Möglichkeit besteht, das Aufsaugen durch eine gezielte Temperatursteuerung und/oder mechanische Energiezufuhr, beispielsweise Rühren, zu unterstütaen. In einem weiteren Verfahrensschritt kann nun das hygroskopische Material an der Oberfläche des Trägermaterials angelagert werden. Bevorzugt wird dazu ein körner- und/oder granulat- und/oder flocken- und/oder pulverartig ausgestaltetes hygroskopisches Material zu den getränkten Trägermaterialeinzelkörpern hinzugegeben und beispielsweise durch Kneten oder Verrühren eine Durchmischung erreicht, derzufolge das hygroskopische Material die Oberfläche der Trägermaterialeinzelkörper möglichst gleichmäßig bedeckt. Es erweist sich dabei als Vorteil, daß sich insbesondere bei vollständiger Durchtränkung auf den Trägermaterialteilelementen eine Schicht aus geschmolzenem Latentwärmespeichermaterial auf Paraffinbasis befindet, die sich beim Abkühlprozeß wieder zurückbildet, an der aber besonders im geschmolzenen Zustand hygroskopisches Material besonders gut anhaftet, wodurch dessen homogene Verteilung vereinfacht wird. In Abwandlung der beschriebenen Arbeitsweise kann das hygroskopische Material auch an den Trägermaterialeinzelkörpern angelagert werden, bevor sie mit Latentwärmespeichermaterial getränkt werden. Besonders bei einem pulverförmigen hygroskopischen Material besteht dadurch die Möglichkeit, daß es beim Einsaugen des Latentwärmespeichermaterials mit hinein in die Aufnahmeräume des Trägerwaterials gelangt, so daß auch eine Mikrowellenaktivierung im Inneren der Trägermaterialeinzelkörper erhalten wird. Es wird daraus deutlich, daß die von dem erfindungsgemäßen Verfahren vorgeschlagene Verwendung von Trägermaterialeinzelkörpern bevorzugt geringer Abmessung zum Aufsaugen von Latentwärmespeichermaterial zusätzlich auch besondere Vorteile für die Herstellung eines mittels hygroskopischem Material mikrowellenaktivierten Latentwärmespeicherkörpers bietet. Sofern keine mikrowellenaktiven Eigenschaften erforderlich sind, kann für die Herstellung eines Latentwärmespeicherkörpers mit einem Latentwärmespeichermaterial auf Paraffinbasis nach dem erfindungsgemäßen Verfahren natürlich auf die Zugabe des hygroskopischen Materials verzichtet werden, wobei aber durch das Aufsaugen des Latentwärmespeichermaterials in Trägermaterialeinzelkörpern bevorzugt geringer Abmessungen und somit größerer Anzahl die oben erläuterten herstellungstechnischen Vorteile gegenüber bekannten Herstellungsverfahren von Latentwärmespeicherkörpern erhalten bleiben.

Es hat sich weiterhin bewährt, als Trägermaterialeinzelkörper handelsübliche Ölbindemittel zu verwenden, insbesondere die von der Rench Chemie GmbH unter dem Markennamen Rench-Rapid R, Rench-Rapid G, Perleen 222, Perleen 444, Rapon 5090, Rapon 5092 und Rapon 5093 angebotenen Produkte. Wird zum Aufsaugen des zu einer hochviskosen Schmelze aufbereiteten Latentwärmespeichermaterials ein körniges Ölbindemittel verwendet, entsteht eine Kugelschüttung mit pulvrigen Anteilen, in der das Latentwärmespeichermaterial in den einzelnen Aufsaugelementen bzw. Latentwärmespeichereinzelkörpern so stark gebunden ist, daß es auch bei Temperaturen, die 20 bis 30° über dem Schmelzpunkt des Paraffins liegen, nicht austritt. Es bildet sich auch hier auf den Aufsaugelementen eine glänzende Schicht geschmolzenen Paraffins, die sich beim Abkühlprozeß wieder zurückbildet und die eine Haftfläche für pulverförmige Elemente des mikrowellenaktiven, hygroskopischen Materials bildet. Bis nach dem Abkühlprozeß bleibt diese Form der Schüttung in sich frei beweglich, d.h. sie wird nicht zu einer harten Masse, wobei diese Beweglichkeit besonders bei Wärmekissen wünschenswert ist. Darüber hinaus lassen sich zum Aufsaugen des Latentwärmespeichermaterials als Trägermaterial auch andere Materialien mit saugfähigen Strukturen, wie z.B. Fasern aus mineral- oder keramischen Werkstoffen, organische Materialien wie Baum- oder Schafswolle, Glas, Phenolharze, Kunststoffe, in deren sämtlichen Verarbeitungsformen, wie Spinnen, Schäumen, Granulieren, Pulverisieren, Flechten, Verweben usw. verwenden. Das Trägermaterial kann somit beispielsweise als körner- und/oder granulat- und/oder flockenartiges Material verwendet werden. Es kann des weiteren auch eine plattenartige Gestalt einer gewünschten Festigkeit aufweisen oder aber auch in Form eines Vliesstoffes ausgebildet sein. Weiterhin kann das erfindungsgemäße Verfahren auch auf die Erzielung von zusätzlichen, in den Ansprüchen 1 bis 20, bzw. der zugehörigen Beschreibung erwähnten Merkmale eines Latentwärmespeicherkörpers ausgerichtet sein. Ebenso folgt aus der vorangehenden Beschreibung des Herstellungsverfahrens, daß ein erfindungsgemäßer Latentwärmespeicherkörper bezüglich seiner Komponenten beliebige Kombinationen der für das Herstellungsverfahren vorgeschlagenen Materialien in den jeweils in Betracht gezogenen oder vergleichbaren Spezifizierungen enthalten kann.

Die Erfindung schlägt zur Lösung des weiteren Aufgabenteils gemäß Anspruch 28 ein Verfahren zur Herstellung eines Latentwärmespeicherkörpers mit in einem Aufnahmeräume aufweisenden Trägermaterial aufgenommenen Latentwärmespeichermaterial auf Paraffinbasis vor, bei dem das Latentwärmespeichermaterial verflüssigt wird und in verflüssigter Form an selbstansaugende kapillarartige Aufnahmeräume des Trägermaterials herangeführt wird, wobei darauf abgestellt wird, daß ein hygroskopisches Material an eine Oberfläche des Trägermaterials herangeführt wird. Es kann demgemäß zur Herstellung eines Latentwärmespeicherkörpers alternativ zu einer Mehrzahl von Trägermaterialeinzelkörpern auch ein zusammenhängendes Trägermaterial verwendet werden. Eine mögliche Anwendung dieses Verfahrens ist beispielsweise die Herstellung von Latentwärmespeicherkörpern geringer Abmessungen bzw. Schichtdioken und/oder einfacher geometrischer Formgebung, bei dem sowohl eine problemlose Konfektionierung eines zusammenhängenden Trägermaterials als auch dessen vollständige Durchtränkung in ausreichend kurzen Zeittntervallen möglich ist.

Nachstehend ist der erfindungsgemäße Latentwärmespeicherkörper anhand der beigefügten Zeichnungen beispielhaft erläutert. Hierbei zeigt:
- Fig. 1: einen erfindungsgemäßen Latentwärmespeicherkörper mit einer geschlossenen Umhüllung in einer perspektivischen Ansicht mit Teilaufbruch,
- Fig. 2: einen erfindungsgemäßen Latentwärmespeicherkörper mit einer perforierten Umhüllung in einer perspektivischen Ansicht mit Teilaufbruch,
- Fig. 3a: das Innere des Latentwärmespeicherkörpers in einem regenerierten Zustand als Ausschnittsvergrößerung zu den Fig. 1 und 2,
- Fig. 3b: das Innere des Latentwärmespeicherkörpers nach kurzzeitiger Erwärmung durch Mikrowellen als Ausschnittsvergrößerung zu den Fig. 1 und 2,
- Fig. 3c: das Innere des Latentwärmespeicherkörpers nach längerer Erwärmung durch Mikrowellen als Ausschnittsvergrößerung zu den Fig. 1 und 2,
- Fig. 4: ein zweites Ausführungsbeispiel eines Latentwärmespeicherkörpers in einer Schnittansicht,
- Fig. 5: ein drittes Ausführungsbeispiel eines Latentwärmespeicherkörpers mit einer verschließbaren Öffnung in einer Schnittansicht,
- Fig. 6: einen mit einem Wasserbehälter verbundenen, Kapillarräume aufweisenden Verteilkörper mit angelagertem hygroskopischen Material,
- Fig. 7: einen Latentwärmespeicherkörper mit darin eingebautem Verteilkörper nach Fig. 6 in einer Explosionsdarstellung,
- Fig. 8: einen Verteilkörper nach Fig. 6 ohne angelagertes hygroskopisches Material,
- Fig. 9: einen Latentwärmespeicherkörper mit darin eingebautem Verteilkörper nach Fig. 8 in einer Explosionsdarstellung,
- Fig. 10: einen mikrowelleninaktiven Latentwärmespeicherkörper mit einer mikrowellenaktiven Hülle in einer Schnittansicht,
- Fig. 11: einen mikrowelleninaktiven Latentwärmespeicherkörper mit einem mikrowellenaktiven Kern,
- Fig. 12: eine Schnittansicht durch eine erste Ausführungsform einer Wärmespeichervorrichtung mit darin enthaltenem hygroskopischem Material und zwei Wärmespeicherelementen,
- Fig. 13: eine Schnittansicht durch eine zweite Ausführungsform einer Wärmespeichervorrichtung mit hygroskopischem Material und zwei in Wärmespeicherelementen mit durch sie hindurchgehenden Hohlräumen,
- Fig. 14: eine Schnittansicht durch eine dritte Ausführungsform einer Wärmespeichervorrichtung mit hygroskopischem Material und einem Wärmespeicherelement,
- Fig. 15: eine Schnittansicht durch eine Wärmespeichervorrichtung nach Fig. 14 mit einer zusätzlichen äußeren Umhüllung,

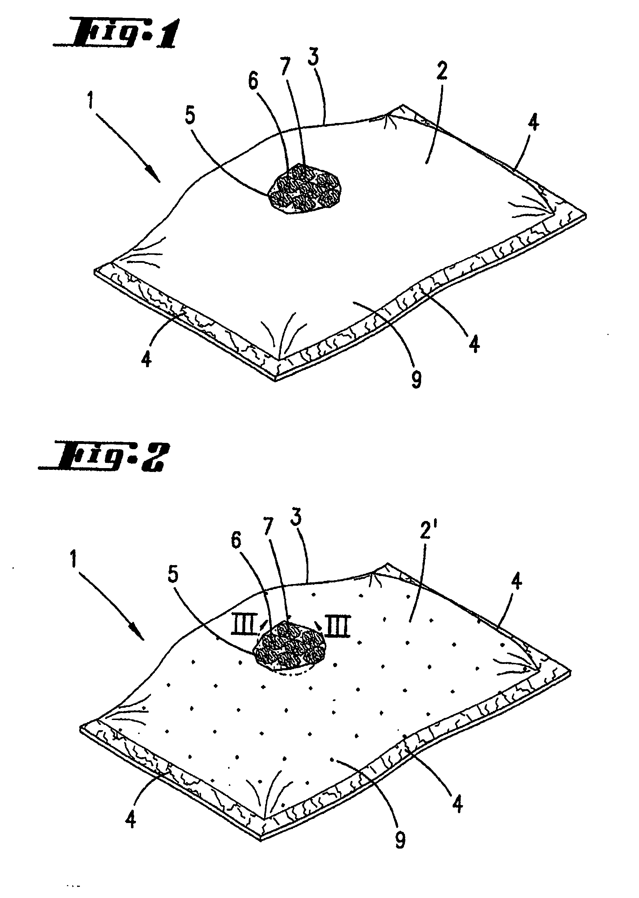

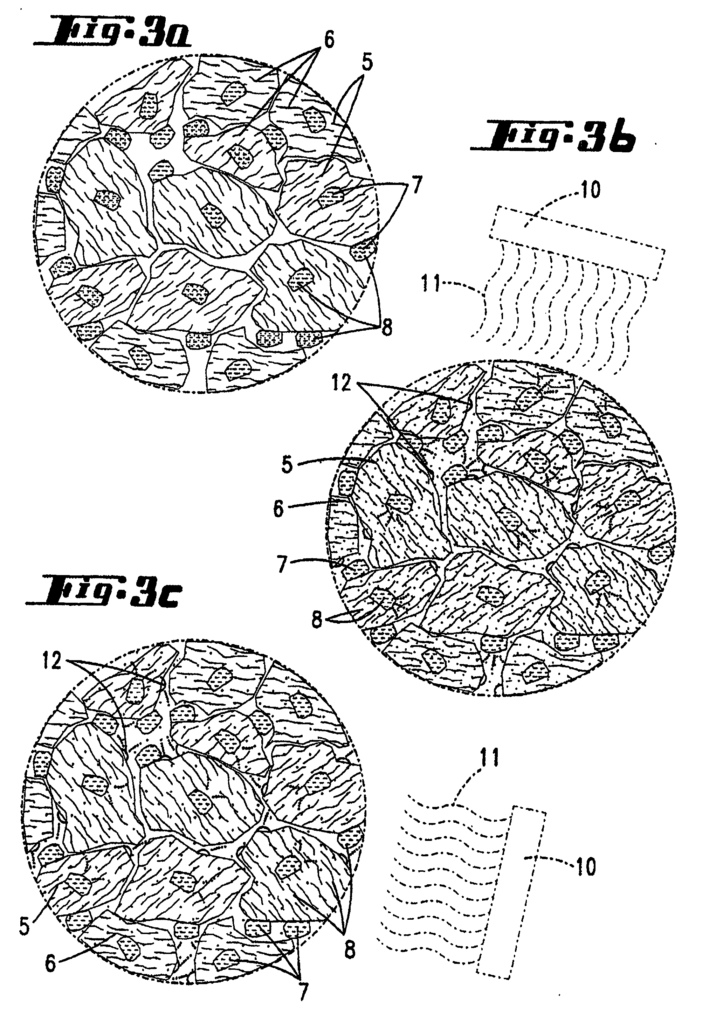

Figur 1 beschreibt einen erfindungsgemäßen Latentwärmespeicherkörper 1, der als ein Wärmekissen ausgebildet ist. Er weist eine dampfdiffusionsundurchlässige Umhüllung 2 auf, die im gezeigten Ausführungsbeispiel aus einer Folie gebildet ist, die entlang einer Umschlagkante 3 zu einer Doppellage gefaltet ist, deren Seitenkanten 4 durch Verschweißen dampfdiffusionsundurchlässig verschlossen sind. Wie durch den Teilaufbruch in der Umhüllung erkennbar ist, enthält der Latentwärmespeicherkörper 1 in seinem Inneren eine Anzahl von Trägermaterialeinzelkörpern 5 mit in kapillaren Aufnahmeräumen aufgenommenen Latentwärmespeichermaterial 6 auf Paraffinbasis. Darüber hinaus ist auf den Oberflächen von Trägermaterialeinzelkörpern ein kornartiges hygroskopisches Material 7 gleichmäßig verteilt angeordnet, in dessen Innerem als mikrowellenaktives Material Wasser 8 gespeichert ist. Zu einer detaillierteren Darstellung sowie zu einer Funktionsbeschreibung wird an dieser Stelle auf die Figuren 3a, 3b, 3c und die zugehörige Beschreibung verwiesen.

Figur 2 beschreibt einen Latentwärmespeicherkörper 1, der sich von dem in Figur 1 gezeigten durch eine dampfdiffusionsdurchlässige Umhüllung 2' unterscheidet. Sie weist eine Mikroperforation mit dampfdiffusionsdurchlässigen Öffnungen 9 auf, die über die gesamte Fläche verteilt sind. Idealerweise ist dabei eine Größe der Öffnungen 9 gewählt, bei der die Öffnungen nur Dampf hindurchlassen. Allerdings ist der Beutel auch dann voll einsatzfähig, wenn größere Öffnungen, z.B. im Bereich bis ca. 0,2 - 0,3 mm vorhanden sind. Bei dem in Figur 2 gezeigten "offenen System" ermöglichen die Öffnungen 9 beim Erwärmen einen Dampfaustritt in die Umgebung und beim Abkühlen eine bedarfsgerechte Regeneration des Latentwärmespeicherkörpers mit Feuchtigkeit aus der Umgebung. Gegenüber dem in Figur 1 dargestellten "geschlossenen System" sind damit beim "offenen System" auch kleine Undichtigkeiten, wie diese beim Verschweißen auftreten können, vernachlässigbar. Daraus resultiert eine erhebliche Reduzierung der Ausschußquote bei der Produktion, die außerdem eine Kostensenkung bei der Qualitätsprüfung bedeutet. Einem Verkleben von Diffusionsöffnungen durch eventuell überschüssiges Paraffin kann bspw. durch eine gezielte Abstimmung des Verhältnisses von Öffnungsdurchmesser zu Oberflächenspannung des Latentwärmespeichermaterials auf Paraffinbasis wirksam begegnet werden, so daß immer genügend Diffusionsöffnungen freigehalten werden. Im gezeigten Beispiel handelt es sich bei der Umhüllung um eine Kunststoffolie, es können jedoch auch Folien aus anderen zweckmäßigen Materialien verwendet werden.

Der in den Figuren 1 und 2 dargestellte Latentwärmespeicherkörper kann in eine Mikrowelle eingegeben werden, die darauf in Betrieb genommen wird. Leistungsstufe und Einwirkungsdauer der Mikrowellen auf das Produkt sind abhängig von der Größe bzw. Dicke der gewünschten Temperatur und der beabsichtigten Aufheizzeit des Produktes. Je nach Parameterwahl ist der Latentwärmespeicherkörper nach einigen Minuten soweit gleichmäßig erhitzt, daß das gesamte darin enthaltene Paraffin aufgeschmolzen ist.

Figur 3a zeigt eine vergrößerte Ansicht auf einen Teil der im Latentwärmespeicherkörper nach den Figuren 1 und 2 enthaltenen Trägermaterialeinzelkörper 5 mit darin in kapillaren Aufnahmeräumen gespeicbertem Latentwärmespeichermaterial 6 auf Paraffinbasis, wobei die auf den Oberflächen der Trägermaterialeinzelkörper 5 gleichmäßig verteilten Körner aus hygroskopischen Material 7 deutlich zu erkennen sind. In weiterer Einzelheit ist durch die angegebenen Punkte dargestellt, daß das mikrowellenaktive Wasser 8 in einem regenerierten Zustand des Latentwärmespeicherkörpers 1 innerhalb der Körner aus hygroskopischem Material 7 gespeichert ist.

Von diesem Zustand ausgehend beschreibt Figur 3b, daß es bereits kurze Zeit nach Einschalten der Mikrowelle 10 durch die in den Latentwärmespeicherkörper 1 eindringende Mikrowellenstrahlung 11 zu einer erwärmungsbedingten Verdampfung und dadurch zum zunächst anteiligen Austritt des Wassers 8 aus dem hygroskopischen Material 7 kommt. Der Dampfaustritt aus dem hygroskopischen Material ist dabei durch die gepunkteten Austrittslinien symbolisch dargestellt. In Figur 3b ist gut zu erkennen, daß sich das erhitzte dampfförmige Wasser 8 in Hohlräumen 12 zwischen den Trägermaterialeinzelkörpern und dem hygroskopischen Material 7 verteilt. Es überstreicht dabei die Oberflächen der Trägermaterialeinzelkörper 5 bzw. des Latentwärmespeichermaterials 6, das aufgrund der Mikrowellenpassivität eine geringe Temperatur aufweist. Aufgrund der in den Latentwärmespeicherkörper 1 eindringenden Mikrowellenstrahlung 11 kommt es zu einer gleichmäßigen Wärmeübertragung von dem dampfförmigen Wasser 8 auf das in den Trägermaterialeinzelkörpern 5 gespeicherte, zunächst noch kalte Wärmespeichermaterial auf Paraffinbasis. Es ist aus Fig.3b weiterhin ersichtlich, daß die Verdampfung und der Dampfaustritt aus dem hygroskopischen Material 7 gegenüber dem in Figur 3a gezeigten regenerierten Zustand eine Verarmung an Wasser 8 im hygroskopischen Material 7 bewirkt. Dies ist durch einen größeren Abstand der Punkte innerhalb des hygroskopischen Materials 7 angedeutet. Darüber hinaus bewirkt die Wärmeübertragung von dem erhitzten dampfförmigen Wasser 8 auf die vergleichsweisen kälteren Oberflächen der mit latentwärmespeichermaterial 6 gefüllten Trägermaterialeinzelkörper 5 eine teilweise Kondensation des dampfförmigen Wassers 8, wodurch es auf den vorgenannten Oberflächen zur Entstehung von Wassertropfen 12 kommt und der Wärmeübergang noch weiter begünstigt wird. Aufgrund dieses hervorragenden Wärmeüberganges wird das in dem Latentwärmespeichermaterial 6 enthaltene Paraffin schnell und gleichmäßig aufgeschmolzen und der Latentwärmespeicherkörper gleichmäßig erwärmt.

Wie in Fig. 3c dargestellt, wird das in feinster Form verteilte und als Tropfen 12 abgegrenzte Kondenswasser durch die Mikrowelleneinstrahlung erneut aufgewärmt, so daß es schließlich zu einer erneuten Verdampfung auch aus den Tropfen kommt, wobei mehrere Zyklen durchlaufen werden. Gleichzeitig wird das hygroskopische Material 7 immer weiter aufgeheizt, ohne daß an ihm eine Dampfkondensation stattfindet. Dadurch kann der entstandene Wasserdampf seine volle Wirkung verbreiten, ohne daß er vorzeitig wieder in dem hygroskopischen Material 7 eingebunden wird. Wenn der Aufheizvorgang beendet ist und die Kondensation des Wasserdampfes voranschreitet, beginnt das hygroskopische Material 7 wieder damit, Wasser 8 einzubinden und für den nächsten Aufheizvorgang bereitzuhalten.

Wird beispielsweise bei einer Fehlbedienung der Mikrowelle oder durch Unachtsamkeit zu viel Wasserdampf gebildet, erhitzt sich der bereits gebildete Wasserdampf immer mehr und tritt bei dem in Figur 2 dargestellten Latentwärmespeicherkörper 1 durch die Öffnungen 9 der Mikroperforierung aus der dampfdiffusionsdurchlässigen Umhüllung 2' in die Umgebung aus. Das restliche Wasser 8 wird aufgrund der hohen Bindungskräfte immer langsamer ausgeheizt, so daß eine rasche bzw. explosionsartige Dampfentwicklung (z.B. aufgrund von Siedeverzug) ausgeschlossen ist. Das als Dampf durch die Perforation in die Umgebung ausgetretene Wasser 8 wird durch das hygroskopische Material 7 aufgrund von Diffusionsvorgängen aus der Luftfeuchte durch die Perforation hindurch in umgekehrter Richtung wieder ausgeglichen. Dieser Regenerationsprozeß läuft immer wieder reproduzierbar und ungehindert ab.

Wenn im Extremfall die Mikrowelle überhaupt nicht mehr abschaltet, wird das im hygroskopischem Material 7 gespeicherte Wasser 8 langsam vollständig ausgeheizt. Sobald sich auch der Wasserdampf durch die Öffnungen in die Umgebung verflüchtigt hat (bei Temperaturen von mehr als 100°C), ist keine Mikrowellenaktivierung ab diesem Zeitpunkt mehr möglich, und eine weitere Aufheizung findet nicht mehr statt. Soweit noch eine gewisse Restfeuchte vorhanden ist, ist eine Brandgefahr durch unzulässige Überhitzung zusätzlich aufgrund der vorhandenen Wasserdampfatmosphäre und restlichem Kristallwassers praktisch ausgeschlossen, da die Temperaturen auf höchstens 200°C (Kristallwasserausheiztemperatur von Kupfersulfat) ansteigen können und andererseits das gegenwärtige Wasser (auch in Dampfform) als "Entzündungsenergie-Schlucker" dient. Bei einer nachfolgenden Abkühlung belädt sich das hygroskopischen Material 7 wieder mit Wasser 8 aus der Luftfeuchte, und nach einiger Zeit (in Abhängigkeit von der Luftfeuchte und der Temperatur) ist das bei der Erhitzung entstandene Konzentrationsdefizit an Wasser 8 wieder ausgeglichen, der Latentwärmespeicherkörper hat sich selbständig wieder regeneriert.

Das in den Figuren 3a, 3b und 3c beschriebene Prinzip läßt sich beispielsweise auch auf Platten, Pasten, Formteile und Formgebungen jeglicher Art ausdehnen. So lassen sich z.B. auch Warmhalteelemente, beispielsweise im Lebensmittelbereich, herstellen, die nicht erst langwierig in Elektro- oder Dampföfen aufgeheizt werden müssen, sondern in einem Mikrowellengerät sehr schnell für Ihren Einsatz vorbereitet werden können. Hieraus ergibt sich ein geringerer Energieraufwand und weiterhin niedrigere erforderliche Vorhaltekapazitäten.

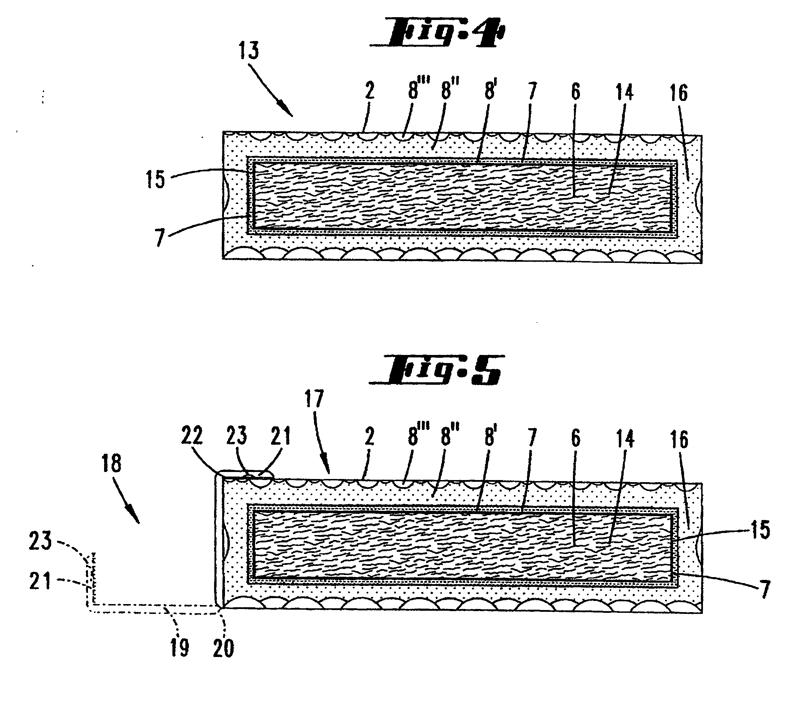

Figur 4 zeigt eine Schnittansicht eines erfindungegemäßen Latentwärmespeicherkörpers 13, der einen Trägermaterialkörper 14 mit darin in kapillaren Aufnahmeräumen aufgenommenem Latentwärmespeichermaterial 6 auf Paraffinbasis enthält. Im konkret gezeigten Beispiel handelt es sich bei dem Trägermaterialkörper 14 um eine Faserplatte aus PAP-Material, wobei im Hinblick auf weitere geeignete Trägermaterialien auch auf den Inhalt der PCT/EP98/01956 verwiesen wird. Die Oberfläche des Trägermaterialkörpers 14 wird von einer Folie 15 bedeckt, die hygroskopisches Material 7 enthält. Die Folie 15 kann dabei beispielsweise selbst aus einem hygroskopischen Material 7 ausgebildet sein, sie kann jedoch alternativ oder in Kombination auch mit einem hygroskopischen Material 7 besetzt bzw. beschichtet sein. Die Folie 15 kann, wie dies im Querschnitt gezeichnet ist, auf der gesamten Oberfläche des getränkten Trägermaterialkörpers 14 vorgesehen sein, sie kann jedoch alternativ auch nur in bestimmten Flächenbereichen angeordnet sein und/oder dampfdiffusionsdurchlässige Öffnungen aufweisen. Der dargestellte Latentwärmespeicherkörper 1 weist weiterhin eine im konkreten Beispiel dampfdiffusionsundurchlässige Umhüllung 2 auf, welche unter Ausbildung eines gasgefüllten Zwischenraumes mittels zeichnerisch nicht wiedergegebener Abstandselemente von dem Trägermaterialkörper mit der Folie 15 beabstandet angeordnet ist. In dem in Figur 4 beschriebenen Zustand des Latentwärmespeicherkörpers 13 liegt das darin enthaltene mikrowellenaktive Wasser 8 nach einer vorangehenden Mikrowellenerwärmung teilweise noch als in der Folie 15 gespeichertes flüssiges Wasser 8', teilweise als in dem gasgefüllten Zwischenraum 16 gespeichertes dampfförmiges Wasser 8'' und teilweise als aus der Dampfphase an der dampfdiffusionsundurchlässigen Umhüllung 2 auskondensiertes flüssiges Wasser 8''' vor. Die Wirkungsweise des dargestellten "geschlossenen Systems" beruht auf einer durch Mikrowellenenergie hervorgerufenen Verdampfung des mikrowellenaktiven Wassers 8, 8', 8'', 8''' und einer anschließenden Übertragung der Wärme von dem Dampf auf das mikrowellenpassive und daher zunächst kältere Latentwärmespeichermaterial 6. Der energiereiche Dampf kann dazu eine Aufheizung der Folie 15 bewirken, die ihrerseits die Wärme an das im Trägermaterialkörper 14 gespeicherte Latentwärmespeichermaterial 6 weitergibt. Alternativ oder ergänzend kann der energiereiche Dampf durch dampfdiffusionsdurchlässige Öffnungen in der Folie 15 bzw. über nicht von der Folie 15 bedeckte Oberflächenbereiche des Trägermaterialkörper in direkten Kontakt mit dem Latentwärmespeichermaterial 6 treten, wodurch eine besonders rasche Wärmeübertragung ermöglicht wird. Darüber hinaus besteht die Möglichkeit, daß das Latentwärmespeichermaterial 6 beispielsweise durch Additive eine modifizierte Kristallstruktur auch mit Hohlstrukturen, wie beispielsweise Hohlkegeln, aufweist, die Strömungswege mit zusätzlicher Wärmeaustauschfläche für den Dampf bereitstellen, so daß die Wärmeübertragung zusätzlich beschleunigt wird. Ein Vorteil des dargestellten, "geschlossenen Systems" besteht darin, daß es sich auch nach einem Einsatz in einer extrem trockenen äußeren Umgebung schnell wieder regeneriert bzw. praktisch jederzeit einsetzbar ist, da das im System vorhandene Wasser 8, 8', 8'', 8''' dazu nicht vollständig in dem hygroskopischen Material 7 gespeichert vorliegen muß. Weiterhin benötigt ein "geschlossenes System" nur sehr geringe Mengen von mikrowellenaktivem Wasser, bei zahlreichen Anwendungen - wie beispielsweise Wärmekissen - reichen bereits wenige Wassertropfen für eine schnelle und gleichmäßige Erwärmung durch die Dampf-/Kondensationsvorgänge aus, wobei sehr schnell Gleichgewichtszustände erreicht werden. Die sehr geringen Mengen schließen außerdem unzulässige Ausdehnungen und damit Zerstörungen des mikrowellenaktiven und -inaktiven Materials aus. Alternativ zu der in Figur 4 angedeuteten Folie 15 eignen sich als Trägermaterialen für das hygroskopische Material 7 auch Gewebe, Gewirke, Flechtwerke, Fasern und Papiere aus mikrowellenaktiven, vorzugsweise gut Feuchtigkeit leitenden und ggf. kapillaren Materialien (bspw. Löschpapier). Bei dem in Figur 4 als Schicht dargestellten hygroskopischen Material 7 kann es sich beispielsweise um eine Schicht aus hygroskopischem Pulver oder Granulat bzw. feinen Körnern handeln.

In Figur 5 ist ein Latentwärmespeicherkörper 17 gezeigt, der sich von dem in Figur 4 gezeigten Latentwärmespeicherkörper 13 durch eine verschließbare Öffnung 18 unterscheidet. Letztere ist als eine im konkreten Ausführungsbeispiel aus Folienmaterial ausgebildete Lasche 19 ausgeführt, die um eine Biegekante 20 der dampfdiffusionsundurchlässigen Umhüllung 2 verschwenkt werden kann. In dem mit durchgezogenen Linien gekennzeichneten, geschlossenen Zustand der Öffnung 18 übergreift im dargestellten Beispiel ein abgewinkelter Laschenabschnitt 21 die Außenseite der Umhüllung 2 an der an die Öffnung 18 angrenzenden Oberseite des Latentwärmespeicherkörpers 17. Es ist dabei durch einen hochbelastbaren Plächenverschluß, bspw. durch eine Klettverbindung, eine den im Betrieb zulässigen Dampfdrücken standhaltende Verbindung zwischen dem Laschenende und der äußeren Umhüllung 2 geschaffen. Durch die in den Laschenabschnitt 21 integrierte Dichtung 23 wird im Zusammenwirken mit der oberseitigen Außenfläche der Umhüllung 2 eine zugleich dampfdiffusionsundurchlässige Verbindung erreicht.

Der in Figur 5 dargestellte Latentwärmespeicherkörper 17 kann bei geschlossener Öffnung 18 wie der in Figur 4 gezeigte Latentwärmespeicherkörper 13 als "geschlossenes System" verwendet werden. In diesem Fall besteht jedoch zusätzlich die Möglichkeit, durch eine planmäßige Ausgestaltung des Flächenverschlusses 22, insbesondere durch die Wahl eines geeigneten Verschlußprinzips und/oder dafür geeigneter Flächenabmessungen, eine zusätzliche Sicherungseinrichtung gegen unerwünscht hohe Dampfdrücke im Inneren des Latentwärmespeicherkörpers 17 bereitzustellen. Sofern eine entsprechende Begrenzung der Verschlußkraft vorgesehen ist, wird der Flächenverschluß 22 bei Überschreiten eines kritischen Dampfdruckes selbsttätig gelöst, so daß der Dampf in die Umgebung entweicht und eine Zerstörung des Latentwärmespeicherkörpers verhindert wird. Auch ohne daß es zu einer selbsttätigen Öffnung der Öffnung 18 kommt, kann diese nach dem Gebrauch des Latentwärmespeicherkörpers manuell geöffnet werden, um eine Veränderung, insbesondere eine Vergrößerung der darin enthaltenen Menge an mikrowellenaktiver Feuchtigkeit zu bewirken. Es besteht dazu bspw. auch die Möglichkeit, daß der Latentwärmespeicherkörper 17 bei geöffneter Öffnung 18 gemeinsam mit einer bspw. in einer Schale aufgenommenen Menge an Wasser 8 in eine Mikrowelle eingegeben wird und diese in Betrieb genommen wird. Das aus der Schale verdampfende Wasser 8 verteilt sich zunächst in der Umgebung des Latentwärmespeicherkörpers 17 und gelangt durch dessen Öffnung 18 in den gasgefüllten Zwischenraum 16, aus dem es von dem hygroskopischen Material 7 in einer gewünschten Menge aufgenommen wird. Alternativ besteht auch die Möglichkeit, den Latentwärmespeicherkörper 17 bei durchgehend geöffneter Öffnung 18 als "offenes System" zu verwenden.

In Figur 6 ist eine Anordnung aus einem Verteilkörper 24 und einem daran mittels eine Leitung 25 angeschlossenen Behälter 26, der Wasser 8 enthält, dargestellt. Die Leitung 25 kann mittels einer Armatur 27 für einen Wasserdurchfluß gesperrt oder freigegeben werden. Wie weiter dargestellt ist, sind auf dem Verteilkörper 24 verteilt Körner aus hygroskopischem Material 7 angeordnet. Der Verteilkörper 24 weist darüber hinaus Kapillarräume auf, die darin Wege zu dem hygroskopischen Material 7 öffnen bzw. bilden. Bevorzugt ist vorgesehen, daß die Kapillarräume in der Weise ausgebildet sind, daß sie nur für das mikrowellenaktive Wasser 8, nicht dagegen für das hochviskosere Latentwärmespeichermaterial 6 kapillarwirksam sind. Der Verteilkörper 24 kann bevorzugt als "Kapillarnetz" ausgestaltet sein, bei welchem die Kapillarräume netzartig miteinander verbunden sind. Bei geöffneter Armatur 27 verteilt sich das Wasser 8 zunächst ausgehend von der Einmündung der Leitung 25 in dem Verteilkörper 24 durch die Kapillarwirkung etwa sternförmig, wie dies durch die Pfeile dargestellt ist. Der Zufluß von Masser 8 kommt erst dann zum erliegen, wenn kein Konzentrationsgefälle im Verteilkörper mehr vorhanden ist. Darüber hinaus nimmt auch das auf dem Verteilkörper 24 angeordnete hygroskopische Material 7 solange Wasser aus den Kapillarräumen des Verteilkörpers 24 auf, bis dessen Sättigungszuatand erreicht worden ist.

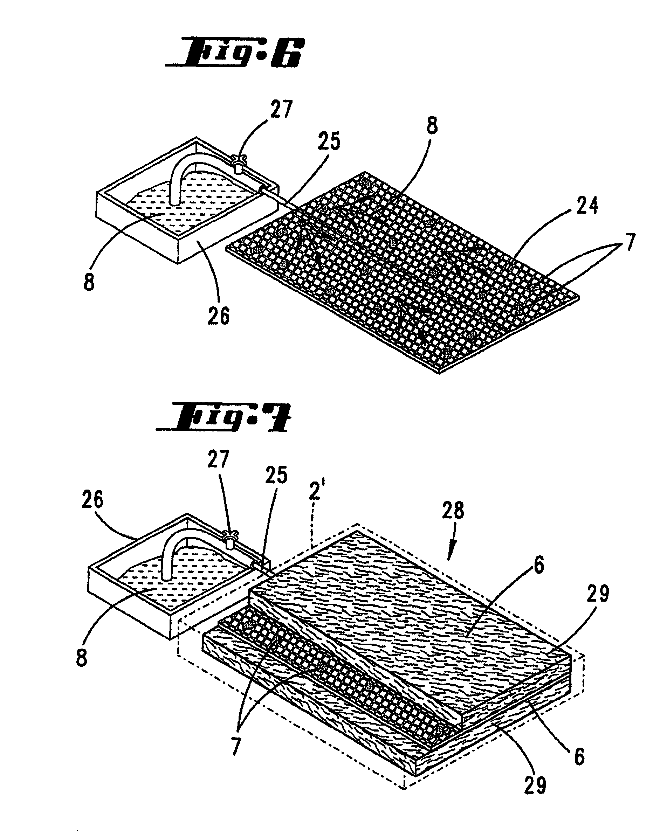

Figur 7 beschreibt einen Latentwärmespeicherkörper 28 mit darin eingebauter Anordnung gemäß Figur 6. In dem konkreten Beispiel befindet sich der Verteilkörper 24 zwischen zwei parallel zueinander beabstandeten plattenförmigen Trägermaterialeinzelkörpern 29 mit darin in kapillarartigen Aufnahmeräumen enthaltenem Latentwärmespeichermaterial 6 auf Paraffinbasis. Der Latentwärmespeicherkörper 28 ist weiterhin von einer dampfdiffusionsdurchlässigen Umhüllung 2' umgeben, durch die die Leitung 25 aus dem Behälter 26 in das Innere des Latentwärmespeicherkörpers hineintritt. Im Betrieb dieses Latentwärmespeicherkörpers wird das in dem Verteilkörper und in dem hygroskopischen Material 7 gespeicherte Wasser 8 zumindest teilweise verdampft und strömt dabei bei gleichzeitiger Wärmeabgabe an das Latentwärmespeichermaterial 6 auch an den dem Verteilkörper 24 zugewandten Oberflächen der Platten 29 entlang. Sofern zusätzlich Hohlräume im Latentwärmespeichermaterial 6 vorgesehen sind, werden auch diese durchströmt und die Wärmeübertragung beschleunigt. Der überschüssige Dampf tritt durch die zeichnerisch nicht dargestellten Öffnungen 9 der dampfdiffusionsdurchlässigen Umhüllung 2' in die Umgebung hinaus, so daß der Latentwärmespeicherkörper 28 unter schneller und gleichmäßiger Erwärmung allmählich an Wasser 8 verarmt. Während des anschließenden Abkühlvorganges wird das noch im Latentwärmespeicherkörper vorhandene dampfförmige Wasser 8 bevorzugt von dem hygroskopischen Material 7 aufgenommen. Der gegenüber dem Ausgangszustand eingetretene Wasserverlust kann durch ein Öffnen der Armatur 27 vollständig oder auch teilweise ausgeglichen werden. Gegenüber der dargestellten Ausführungsform besteht auch die Möglichkeit, daß der Verteilkörper 24 selbst hygroskopische Eigenschaften aufweist, so daß auf die Anordnung von gesondertem hygroskopischem Material 7 auf dem Verteilkörper 24 verzichtet werden kann.

Auch die in Figur 8 gezeigte Anordnung unterscheidet sich von der in Figur 6 gezeigten, indem darin auf die Anordnung von hygroskopischem Material 7 auf dem Verteilkörper verzichtet wird. Dies kann auch dann sinnvoll sein, wenn der Verteilkörper nicht selbst aus einem hygroskopischen Material 7 ausgebildet ist, dafür aber - wie in Figur 9 gezeigt - zwischen den angrenzenden Trägermaterialeinzelkörpern 5 mit darin aufgenommenem Latentwärmespeichermaterial 6 hygroskopisches Material 7 verteilt angeordnet ist. In dem in Figur 9 gezeigten Latentwärmespeicherkörper 30 sind die mit Latentwärmespeichermaterial 6 vollgesaugten Trägermaterialeinzelkörper 5 mit dem dazwischen verteilten hygroskopischen Material zu Platten 29 geformt, zwischen denen der Verteilkörper 24 angeordnet ist. Die aus hygroskopischem Material 7 gebildeten Körper sind dabei von einer zeichnerisch nicht dargestellten, für Latentwärmespeichermaterial 6 undurchlässigen Folie umschlossen, wobei die Folie eine Anzahl winzig kleiner Löcher, die makroskopisch gerade noch sichtbar sind, enthält. Auf diese Weise ergibt sich einerseits eine Abschottung des hygroskopischen Materials 7 von dem Latentwärmespeichermaterial 6, so daß dieses nicht in die Poren des hygroskopischen Materials 7 eindringen kann. Andererseits besteht aber die Möglichkeit, daß von dem hygroskopischen Material 7 speicherbare Feuchtigkeit, insbesondere Wasser, die Folie durch die winzigen Löcher durchtritt, so daß das hygroskopische Material 7 Feuchtigkeit an die Umgebung abgeben kann bzw. aus der Umgebung aufnehmen kann. Aufgrund der dargestellten dreidimensionalen Verteilung des hygroskopischen Materials 7 wird nach der Erwärmung eine selbständige Regeneration durch Feuchtigkeitsaufnahme durch die dampfdiffusionsdurchlässige Umhüllung 2' aus der Umgebung unterstützt.

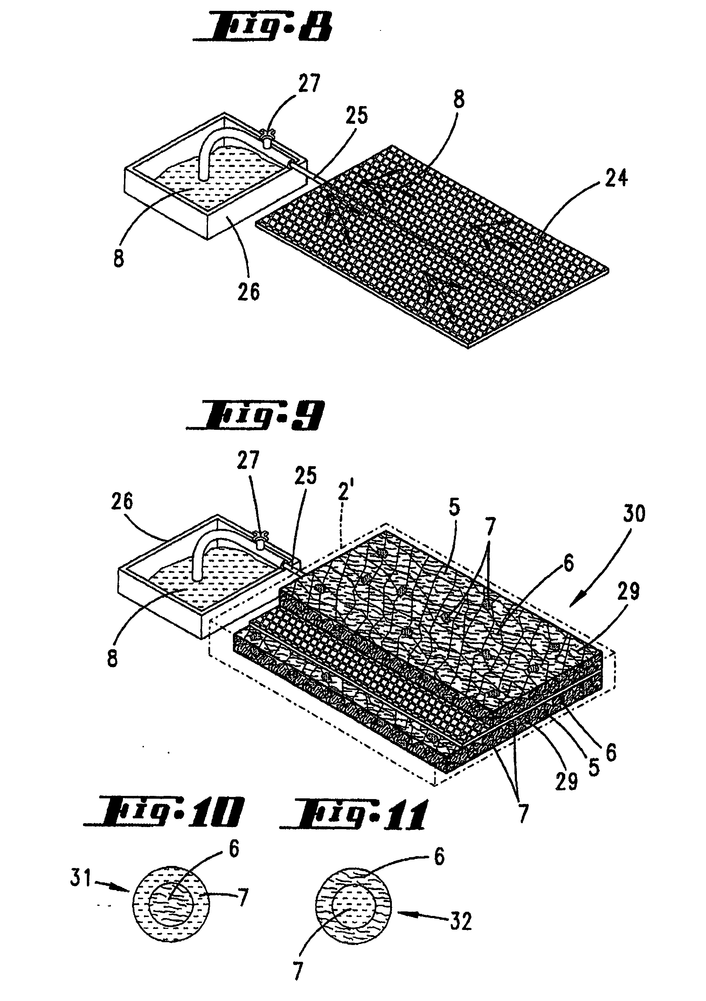

In Figur 10 ist ein Latentwärmespeicherkörper 31 dargestellt, bei dem um einen Kernbereich aus mikrowellenpassivem bzw. mikrowellenaktivem Latentwärmespeichermaterial 6 auf Paraffinbasis eine durchgängige Schicht aus hygroskopischem Material 7 angeordnet ist. Durch die in dem hygroskopischen Material 7 gespeicherte, zeichnerisch nicht dargestellte mikrowellenaktive Feuchtigkeit ist eine Mikrowellenaktivierung des Latentwärmespeicherkörpers 31 erreicht. In Umkehrung dieses Prinzips zeigt Figur 11 einen Latentwärmespeicherkörper 32, der im Inneren des Latentwärmespeichermaterials 6 einen Kernbereich aus einem hygroskopischen Material 7 besitzt. In den Ausführungsbeispielen der Figuren 10 und 11 besteht auch die Möglichkeit, daß das Latentwärmespeichermaterial in kapillaren Aufnahmeräumen eines Trägermaterialkörpers aufgenommen ist. Weiterhin ist daran gedacht, daß eine größere Zahl der in den Figuren 10 und 11 gezeigten Latentwärmespeicherkörper als Latentwärmespeicherteilkörper verwendet werden, indem eine Mehrzahl von Ihnen gemeinsam in einem Latentwärmespeicherkörper mit größeren Abmessungen aufgenommen ist.

Figur 12 zeigt in einer Schnittansicht eine Wärmespeichervorrichtung 33, die sandwichartig aus zwei sich senkrecht zur Zeichenebene plattenartig erstreckenden Wärmespeicherelementen 34, 34' aus Wärmespeichermaterial und einem zwischen diesen Wärmespeicherelementen 34, 34' in Form einer Zwischenschicht angeordneten hygroskopischen Material 7 ausgebildet ist. Im dargestellten Ausführungsbeispiel beruht der Zusammenhalt des Schichtenverbunds auf einer, wie dargestellt, waagerechten Anordnung der Wärmespeichervorrichtung und der senkrecht dazu wirkenden Schwerkraft. Ein Zusammenhalt kann alternativ auch durch Befestigungsmittel unterstützt bzw. erreicht werden, deren Auswahl sich an den im einzelnen verwendeten Materialien orientiert. Sofern es sich bei den Wärmespeicherelementen 34, 34' z.B. um Kunststoffplatten handelt und als hygroskopisches Material 7 ein Löschpapier oder ein hygroskopisches Vlies verwendet wird, kann ein Zusammenhalt durch eine abschnittsweise oder vollflächige Verklebung zwischen den Schichten erreicht werden. In einer Variante kann vorgesehen sein, daß die Wärmespeicherelemente 34, 34' aus Holz, beispielsweise aus Pappelholz, bestehen und daß als hygroskopisches Material 7 ein pulver- oder granulatartiges Salz verwendet wird. In diesem Fall besteht die Möglichkeit, einen Zusammenhalt der Schichten mit sie durchsetzenden formschlüssigen Verbindungselemente, beispielsweise Nieten, zu gewährleisten. In dem in Figur 12 dargestellten Ausführungsbeispiel sind die Wärmespeicherelemente 34, 34' aus einem wasserundurchlässigen und für Mikrowellenstrahlung durchlässigen Material ausgebildet. In einem durch Mikrowellenstrahlen 11 angedeuteten Mikrowellenfeld dringen die Mikrowellenstrahlen durch die Wärmespeicherelemente 34, 34' und in einem dem Flächenverhältnis entsprechenden geringeren Anteil auch über die Stirnflächen in das hygroskopische Material 7 ein. Das im hygroskopischen Material 7 gespeicherte, zeichnerisch nicht dargestellte Wasser wird durch dielektrische Verluste erwärmt und gibt diese Eigenwärme an das hygroskopische Material 7 sowie direkt und indirekt darüber an die angrenzenden Wärmespeicherelemente 34, 34' weiter. Die in Fig. 12 gezeigte Wärmespeichervorrichtung weist dazu eine derartige Anordnung von hygroskopischen Material zu Wärmespeicherelementen bzw. Wärmespeichermaterial auf, die speziell auf eine schnelle und ungehinderte Wärmeübertragung vom erhitzten Wasser bzw. erhitzten hygroskopischen Material 7 auf die noch kälteren Wärmespeicherelemente 34, 34' durch Wärmeleitung abgestimmt ist, indem eine große Berührfläche zwischen den einzelnen Schichten vorgesehen ist. Die Wärmeleitung wird zu einem gewissen Grad unterstützt durch einen konvektiven Wärmeübergang zufolge einer Strömung des bei der Erhitzung entstandenen Wasserdampfes durch das hygroskopische Material zu den Oberflächen der Wärmespeicherelemente 34, 34'. Zu einem bestimmten Anteil erfolgt auch eine Wärmeübertragung durch Wärmeabstrahlung an die kälteren Wärmespeicherelemente 34, 34'. Die mikrowellen- bzw. erwärmungsbedingte Verdampfung des im hygroskopischen Material 7 gespeicherten Wassers ist mit einer Volumenvergrößerung des Wassers verbunden. Die Volumenvergrößerung führt zu einem Druckanstieg des Wasserdampfes in den Hohlräumen des hygroskopischen Materials 7, der einen wesentlichen Antrieb für einen zu den Seitenrändern 35, 35' der Wärmespeichervorrichtung gerichteten Wasserdampfströmung liefert. Durch das Druckgefälle kommt es an den Seitenrändern 35, 35' zu einem Wasserdampfaustritt, aufgrund dessen das hygroskopische Material 7 vorübergehend an Wasserdampf verarmt. Bei einer nachfolgenden Abkühlung der Wärmespeichervorrichtung 33 besitzt das hygroskopische Material 7 die Fähigkeit, der Umgebung über seine freien Oberflächen an den Seitenrändern 35, 35' Luftfeuchtigkeit zu entziehen. Durch einen entsprechend einsetzenden Wasserdampfzustrom 37 wird der Wasserverlust wieder ausgeglichen, wobei das zunächst an den Rändern aufgenommene Wasser durch Diffusion auch in das Innere der aus hygroskopischem Material 7 gebildeten Schicht gelangt. Nach einer bestimmten Zeit stellt sich im hygroskopischen Material 7 gegenüber der Umgebung wieder eine Gleichgewichtsbeladung mikrowellenaktiver mit Feuchtigkeit ein, und die Wärmespeichervorrichtung 33 hat sich vollständig regeneriert. Sie steht dann für weitere Erwärmungen in einem Mikrowellenfeld zur Verfügung.

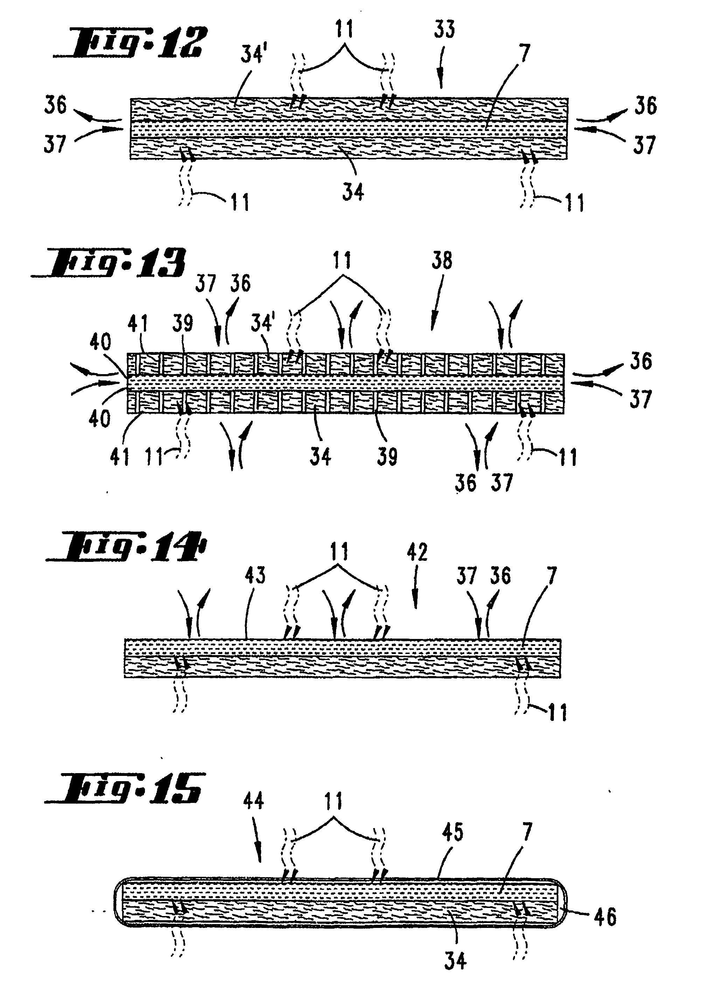

Figur 13 beschreibt in einer Schnittansicht eine Wärmespeichervorrichtung 38, die sich dadurch von der in Figur 12 gezeigten Wärmespeichervorrichtung 33 unterscheidet, daß in den plattenartigen Wärmespeicherelementen 34, 34' Hohlräume 39 ausgebildet sind, die sich jeweils durchgehend zwischen der dem hygroskopischen Material 7 zugewandten Innenfläche 40 und der in Feuchtigkeitsaustausch mit der Umgebung stehenden Außenfläche 41 des jeweils gleichen Wärmespeicherelemente erstrecken. Der Darstellung ist diesbezüglich symbolisch zu entnehmen, daß die Hohlräume 39 Strömungswege für Wasserdampf zwischen dem hygroskopischen Material und der Umgebung bilden. Der Wasserdampfaustritt 36 und Wasserdampfzustrom 37 werden dadurch verstärkt und verlaufen in einer gleichmäßigeren Verteilung entlang der Oberfläche des hygroskopischen Materials 7. Dadurch ergeben sich kürzere Diffusionswege und Diffusionszeiten des Wassers bzw. der verwendeten Mikrowellenaktiven Feuchtigkeit im hygroskopischen Material 7, so daß auf vorteilhafte Weise ein schnelleres Regenerieren der Wärmespeichervorrichtung nach einer Anwendung in einem Mikrowellenfeld möglich ist. Die Hohlräume 39 können innerhalb der sich senkrecht zur Zeichenebene erstrekkenden Ebene in regelmäßiger oder unregelmäßiger zweidimensionaler Verteilung vorgesehen sein.

In Figur 14 ist in einer Schnittansicht eine dritte Ausführungsform einer erfindungsgemäßen Wärmespeichervorrichtung 42 dargestellt, die ebenfalls ein hygroskopisches Material 7 in einer für eine Wärmeübertragung auf das Wärmespeichermaterial geeigneten Anordnung enthält. Im Gegensatz zu den Ausführungsbeispielen nach den Figuren 12 und 13 weist die Wärmespeichervorrichtung 42 nur ein einziges aus Wärmespeicherinaterial gebildetes Wärmespeicherelement 34 auf. Dieses ist großflächig mit einer aus hygroskopischem Material 7 gebildeten Schicht verbunden, um dadurch eine ungehinderte Wärmeübertragung von dem durch Mikrowellenstrahlung 11 erwärmten, zeichnerisch nicht dargestellten Wasser bzw. Wasserdampf auf das Wärmespeicherelement 34 und von dem Wasser bzw. Wasserdampf über das hygroskopische Material 7 auf das Wärmespeicherelement 34 zu ermöglichen. Durch den Verzicht auf ein zweites Wärmespeicherelement 34' ergibt sich eine große freiliegende Regenerationsfläche 43. Entsprechend ist gegenüber der Wärmespeichervorrichtung 38 eine nochmals schnellere Regeneration des hygroskopischen Materials ermöglicht, die außerdem durch eine gezielte Vergrößerung des Wasserdampfpartialdruckes in der Umgebung nochmals gesteigert werden kann.

In Figur 15 ist in einer Schnittansicht eine vierte Ausführungsform einer Wärmespeichervorrichtung 44 mit hygroskopischem Material 7 und einem Wärmespeicherelement 34 dargestellt, die sich von der in Figur 14 gezeigten Wärmespeichervorrichtung 42 durch eine zusätzlich vorgesehene elastische oder starre, druckfeste Hülle 45 unterscheidet. Im dargestellten Ausführungsbeispiel ist die Hülle 45 für Wasserdampf undurchlässig ausgebildet, so daß bei einer durch Mikrowellenstrahlung 11 bewirkten Erwärmung und Verdampfung des zeichnerisch nicht dargestellten, im hygroskopischen Material 7 gespeicherten Wassers kein Feuchtigkeitsverlust der Wärmespeichervorrichtung 44 eintreten kann. Die bei einer Erwärmung aus dem hygroskopischen Material 7 austretende Feuchtigkeit wird von dem zwischen Wärmespeicherelement 34 und hygroskopischem Material 7 mit der Hülle 45 eingeschlossenen Speicherraum 46 aufgenommen, so daß von dort aus eine schnelle Regeneration des hygroskopischen Materials 7 erfolgen kann. Alternativ besteht auch die Möglichkeit, die Hülle 45 dampfdiffusionsdurchlässig auszubilden, so daß ein Feuchteaustausch mit der Umgebung ermöglicht ist. Hinsichtlich der Materialauswahl und weiterer Ausgestaltungsmöglichkeiten der Hülle 45 wird auf die weitere diesbezügliche Beschreibung in dieser Anmeldung verwiesen.

## Patentansprüche

1. Latentwärmespeicherkörper (1, 17, 28, 30, 31, 32) mit einem Latentwärmespeichermaterial (6) auf Paraffinbasis, wobei der Latentwärmespeicherkörper ein hygroskopisches Material enthält und ein Trägermaterial, in welchem das Latentwärmespeichermaterial aufgenommen ist, **dadurch gekennzeichnet, dass** das Trägermaterial kapillarartige Aufnahmeräume aufweist, die eine selbstansaugende Wirkung hinsichtlich des Latentwärmespeichermaterials ausüben.

2. Latentwärmespeicherkörper (1,17,28,30,31,32) nach Anspruch 1, **dadurch gekennzeichnet, dass** der Latentwärmespeicherkörper (1,17,28,30,31,32) in einer dampfdiffusionsdurchlässigen Umhüllung (2') aufgenommen ist.

3. Latentwärmespeicherkörper (1,17,28,30,31,32) nach Anspruch 1, **dadurch gekennzeichnet, dass** der Latentwärmespeicherkörper (1,17,28,30,31,32) in einer dampfdiffusionsundurchlässigen Umhüllung (2) aufgenommen ist.

4. Latentwärmespeicherkörper (1,17,28,30,31,32) nach einem der vorhergehenden Ansprüche , **dadurch gekennzeichnet, dass** das hygroskopische Material (7) in einer dampfdiffusionsdurchlässigen Umhüllung aufgenommen ist.

5. Latentwärmespeicherkörper (1,17,28,30,31,32) nach einem der vorhergehenden Ansprüche, **dadurch gekennzeichnet, dass** das Latentwärmespeichermaterial (6) Kapillarräume aufweist, die Wege zu dem hygroskopischen Material (7) öffnen.

6. Latentwärmespeicherkörper (1,17,28,30,31,32) nach einem der vorhergehenden Ansprüche, **dadurch gekennzeichnet, dass** das hygroskopische Material (7) im Latentwärmespeicherkörper (1,17,28,30,31,32) verteilt angeordnet ist.

7. Latentwärmespeicherkörper (1,17,28,30,31,32) nach einem der vorhergehenden Ansprüche, **dadurch gekennzeichnet, dass** der Massenanteil des hygroskopischen Materials (7) im Latentwärmespeicherkörper (1,17,28,30,31,32) 5 % oder weniger beträgt.

8. Latentwärmespeicherkörper (1,17,28,30,31,32) nach einem der vorhergehenden Ansprüche, **dadurch gekennzeichnet, dass** in dem Latentwärmespeicherkörper (1,17,28,30,31,32) hygroskopisches Material (7) unterschiedlicher Wirksamkeit enthalten ist.

9. Latentwärmespeicherkörper (1,17,28,30,31,32) nach einem der vorhergehenden Ansprüche, **dadurch gekennzeichnet, dass** der Latentwärmespeicherkörper eine Anzahl von Trägermaterialeinzelkörpern (5) enthält.

10. Latentwärmespeicherkörper (1,17,28,30,31,32) nach Anspruch 9, **dadurch gekennzeichnet, dass** der Trägermaterialeinzelkörper (5) eine plattenartige oder kornartige Gestalt aufweist.

11. Latentwärmespeicherkörper (1,17,28,30,31,32) nach einem der vorhergehenden Ansprüche, **dadurch gekennzeichnet, dass** das hygroskopische Material (7) körnerartig oder granulatartig ausgebildet ist.

12. Latentwärmespeicherkörper (1,17,28,30,31,32) nach einem der Ansprüche 1 bis 11, **dadurch gekennzeichnet, dass** das hygroskopische Material (7) als Pulver ausgebildet ist.

13. Latentwärmespeicherkörper (1,17,28,30,31,32) nach einem der vorhergehenden Ansprüche, **dadurch gekennzeichnet, dass** das hygroskopische Material (7) auf einem Trägermaterialeinzelkörper (5) angeordnet ist.

14. Latentwärmespeicherkörper (1,17,28,30,31,32) nach einem der Ansprüche 9 bis 13, **dadurch gekennzeichnet, dass** der Trägermaterialeinzelkörper (5) und die Umhüllung (2,2') von einem Gas enthaltenden Raum beabstandet angeordnet sind.

15. Latentwärmespeicherkörper (1,17,28,30,31,32) nach einem der vorhergehenden Ansprüche, **dadurch gekennzeichnet, dass** sich in dem Latentwärmespeicherkörper (1,17,28,30,31,32) ein Verteilkörper (24) flächig und/oder räumlich erstreckt, wobei der Verteilkörper Kapillarräume aufweist, die Wege zu dem hygroskopischen Material (7) öffnen.

16. Latentwärmespeicherkörper (1,17,28,30,31,32) nach einem der Ansprüche 1 bis 15, **dadurch gekennzeichnet, dass** auf dem Verteilkörper (24) hygroskopisches Material (7) angeordnet ist.

17. Latentwärmespeicherkörper (1,17,28,30,31,32) nach Anspruch 16, **dadurch gekennzeichnet, dass** der Verteilkörper 24 aus einem hygroskopischen Material (7) ausgebildet ist.

18. Latentwärmespeicherkörper (1,17,28,30,31,32) nach einem der vorhergehenden Ansprüche 2 bis 17, **dadurch gekennzeichnet, dass** die Umhüllung (2,2') des Latentwärmespeicherkörpers (1,17,28,30,31,32) eine verschließbare Öffnung (18) aufweist.

19. Latentwärmespeicherkörper (1,17,28,30,31,32) nach Anspruch 18, **dadurch gekennzeichnet, dass** sich der Verteilkörper (24) von der verschließbaren Öffnung (18) der Umhüllung (2,2') ausgehend in den Latentwärmespeicherkörper (1,17,28,30,31,32) erstreckt.

20. Latentwärmespeicherkörper (1,17,28,30,31,32) nach einem der vorhergehenden Ansprüche, **dadurch gekennzeichnet, dass** das Latentwärmespeichermaterial (6) ein viskositätssteigerndes Additiv enthält.

21. Verfahren zur Herstellung eines hygroskopisches Material enthaltenden Latentwärmespeicherkorpers (1,17,28,30,31,32) mit in einem Aufnahmeräume aufweisenden Trägermaterial aufgenommenen Latentwärmespeichermaterial (6) auf Paraffinbasis, bei dem das Latentwärmespeichermaterial (6) verflüssigt wird und in verflüssigter Form an selbstansaugende kapillarartige Aufnahmeräume des Trägermaterials herangeführt wird, **dadurch gekennzeichnet, dass** das verflüssigte Latentwärmespeichermaterial (6) an eine Mehrzahl von Trägermaterialeinzelkörpern (5) eines Latentwärmespeicherkörpers (1,17,28,30,31,32) herangeführt wird.

22. Verfahren nach Anspruch 21, **dadurch gekennzeichnet, dass** das hygroskopisches Material (7) an eine Oberfläche des Trägermaterials angelagert wird.

23. Verfahren nach Anspruch 22, **dadurch gekennzeichnet, dass** das hygroskopische Material (7) an die Oberfläche des Trägermaterials angelagert wird, nachdem das verflüssigte Latentwärmespeichermaterial (6) an die selbstansaugenden kapillarartigen Aufnahmeräume des Trägermaterials herangeführt worden ist.

24. Verfahren nach Anspruch 21, **dadurch gekennzeichnet, dass** ein körner- und/oder granulat- und/oder pulver- und/oder flockenartiges hygroskopisches Material (7) verwendet wird.

25. Verfahren nach einem der Ansprüche 21 bis 24, **dadurch gekennzeichnet, dass** als Trägermaterial körner- und/oder granulat- und/oder flockenartiges Material verwendet wird.

26. Verfahren nach einem der Ansprüche 21 bis 25, **dadurch gekennzeichnet, dass** als Trägermaterial ein Vlies verwendet wird.

27. Verfahren nach einem oder mehreren der Ansprüche 21 bis 26, **dadurch gekennzeichnet, dass** das Trägermaterial in einer plattenartigen Ausgestaltung verwendet wird.

28. Verfahren nach dem Oberbegriff von Anspruch 21, **dadurch gekennzeichnet, dass** ein hygroskopisches Material (7) an eine Oberfläche des Trägermaterials angelagert wird.

29. Verfahren nach Anspruch 28, **dadurch gekennzeichnet, dass** die Anlagerung an die Oberfläche des Trägermaterials erfolgt, nachdem das verflüssigte Latentwärmespeichermaterial (6) an die selbstansaugenden kapillarartigen Aufnahmeräume des Trägermaterials herangeführt worden ist.

30. Verfahren nach einem der Ansprüche 28 oder 29, **dadurch gekennzeichnet, dass** ein körner- und/oder granulat- und/oder pulver- und/oder flockenartiges hydroskopisches Material (7) verwendet wird.

31. Verfahren nach einem der Ansprüche 28 bis 30, **dadurch gekennzeichnet, dass** als Trägermaterial körner- und/oder granulat- und/oder flockenartiges Material verwendet wird.

32. Verfahren nach einem der Ansprüche 28 bis 31, **dadurch gekennzeichnet, dass** als Trägermaterial ein Vlies verwendet wird.

33. Verfahren nach einem der Ansprüche 28 bis 32, **dadurch gekennzeichnet, dass** das Trägermaterial in einer plattenartigen Ausgestaltung verwendet wird.

## Claims

1. Latent heat storage body (1, 17, 28, 30, 31, 32) having a paraffin-based latent heat storage material (6), the latent heat storage body containing a hygroscopic material and a carrier material in which the latent heat storage material is held, **characterized in that** the carrier material has capillary-like holding spaces which effect an automatic sucking action with respect to the latent heat storage material.

2. Latent heat storage body (1, 17, 28, 30, 31, 32) according to Claim 1, **characterized in that** the latent heat storage body (1, 17, 28, 30, 31, 32) is held in a sheath (2') which is permeable to vapour diffusion.

3. Latent heat storage body (1, 17, 28, 30, 31, 32) according to Claim 1, **characterized in that** the latent heat storage body (1, 17, 28, 30, 31, 32) is held in a sheath (2) which is impermeable to vapour diffusion.

4. Latent heat storage body (1, 17, 28, 30, 31, 32) according to one of the preceding claims, **characterized in that** the hygroscopic material (7) is held in a sheath which is permeable to vapour diffusion.

5. Latent heat storage body (1, 17, 28, 30, 31, 32) according to one of the preceding claims, **characterized in that** the latent heat storage material (6) has capillary spaces which open up paths to the hygroscopic material (7).

6. Latent heat storage body (1, 17, 28, 30, 31, 32) according to one of the preceding claims, **characterized in that** the hygroscopic material (7) is disposed in distributed manner in the latent heat storage body (1, 17, 28, 30, 31, 32).

7. Latent heat storage body (1, 17, 28, 30, 31, 32) according to one of the preceding claims, **characterized in that** the hygroscopic material (7) is 5% or less by mass of the latent heat storage body (1, 17, 28, 30, 31, 32).

8. Latent heat storage body (1, 17, 28, 30, 31, 32) according to one of the preceding claims, **characterized in that** hygroscopic material (7) of differing efficiency is contained in the latent heat storage body (1, 17, 28, 30, 31, 32).

9. Latent heat storage body (1, 17, 28, 30, 31, 32) according to of the preceding claims, **characterized in that** the latent heat storage body contains a number of individual support-material bodies (5).

10. Latent heat storage body (1, 17, 28, 30, 31, 32) according to one of the preceding claims, **characterized in that** the individual support-material body (5) is in platelet-like or grain-like form.

11. Latent heat storage body (1, 17, 28, 30, 31, 32) according to one of the preceding claims, **characterized in that** the hygroscopic material (7) is provided in the form of grains or granules.

12. Latent heat storage body (1, 17, 28, 30, 31, 32) according to one of Claims 1 to 11, **characterized in that** the hygroscopic material (7) is provided as a powder.

13. Latent heat storage body (1, 17, 28, 30, 31, 32) according to one of the preceding claims, **characterized in that** the hygroscopic material (7) is disposed on an individual support-material body (5).

14. Latent heat storage body (1, 17, 28, 30, 31, 32) according to one of Claims 9 to 13, **characterized in that** the individual support-material body (5) and the sheath (2, 2') are disposed spaced-apart by a gas-containing space.

15. Latent heat storage body (1, 17, 28, 30, 31, 32) according to one of the preceding claims, **characterized in that** a distribution body (24) extends in two and/or three dimensions in the latent heat storage body (1, 17, 28, 30, 31, 32), the distribution body having capillary spaces which open up paths to the hygroscopic material (7).

16. Latent heat storage body (1, 17, 28, 30, 31, 32) according to one of the preceding claims, **characterized in that** hygroscopic material (7) is provided on the distribution body (24).

17. Latent heat storage body (1, 17, 28, 30, 31, 32) according to Claim 16, **characterized in that** the distribution body (24) is formed from a hygroscopic material (7).

18. Latent heat storage body (1, 17, 28, 30, 31, 32) according to one of the preceding Claims 2 to 17, **characterized in that** the sheath (2, 2') of the latent heat storage body (1, 17, 28, 30, 31, 32) has a closeable opening (18).

19. Latent heat storage body (1, 17, 28, 30, 31, 32) according to Claim 18, **characterized in that** the distribution body (24) extends from the closeable opening (18) in the sheath (2, 2') into the latent heat storage body (1, 17, 28, 30, 31, 32).

20. Latent heat storage body (1, 17, 28, 30, 31, 32) according to one of the preceding claims, **characterized in that** the latent heat storage material (6) contains a viscosity-increasing additive.

21. Method for producing a hygroscopic-material-containing latent heat storage body (1, 17, 28, 30, 31, 32) with paraffin-based latent heat storage material (6) held in a carrier material which has holding spaces, in which method the latent heat storage material (6) is liquefied and is supplied in liquefied form to capillary-like holding spaces in the carrier material which suck in automatically, **characterized in that** the liquefied latent heat storage material (6) is supplied to a plurality of individual support-material bodies (5) of a latent heat storage body (1, 17, 28, 30, 31, 32).

22. Method according to Claim 21, **characterized in that** a hygroscopic material (7) is applied to a surface of the carrier material.

23. Method according to Claim 22, **characterized in that** the hygroscopic material (7) is applied to the surface of the carrier material after the liquefied latent heat storage material (6) has been supplied to the automatically sucking, capillary-like holding spaces in the carrier material.

24. Method according to Claim 21, **characterized in that** a hygroscopic material (7) which is in the form of grains and/or granules and/or powder and/or flakes is used.

25. Method according to one of Claims 21 to 24, **characterized in that** the carrier material used is material in the form of grains and/or granules and/or flakes.

26. Method according to one of Claims 21 to 25, **characterized in that** the carrier material used is a nonwoven.

27. Method according to one of Claims 21 to 26, **characterized in that** the carrier material is used in a platelet-like form.

28. Method according to the preamble of Claim 21, **characterized in that** a hygroscopic material (7) is applied to a surface of the carrier material.

29. Method according to Claim 28, **characterised in that** application to the surface of the carrier material is effected after the liquefied latent heat storage material (6) has been supplied to automatically sucking-in, capillary-like holding spaces of the carrier material.

30. Method according to one of Claims 28 or 29, **characterized in that** a hygroscopic material (7) which is in the form of grains and/or granules and/or powder and/or flakes is used.

31. Method according to one of Claims 28 to 30, **characterized in that** the carrier material used is material in the form of grains and/or granules and/or flakes.

32. Method according to one of Claims 28 to 31, **characterized in that** the carrier material used is a nonwoven.

33. Method according to one of Claims 28 to 32, **characterized in that** the carrier material is used in a platelet-like form.

## Revendications

1. Corps accumulateur à chaleur latente (1, 17, 28, 30, 31, 32), avec un matériau accumulateur de chaleur latente (6) à base de paraffine, le corps accumulateur de chaleur latente contenant un matériau hygroscopique et un matériau support, dans lequel est logé le matériau accumulateur de chaleur latente, **caractérisé en ce que** le matériau support présente des espaces de logement du type capillaire, exerçant un effet auto-aspirant du point de vue du matériau accumulateur de chaleur latente.

2. Corps accumulateur à chaleur latente (1, 17, 28, 30, 31, 32) selon la revendication 1, **caractérisé en ce que** le corps accumulateur de chaleur latente (1, 17, 28, 30, 31, 32) est logé dans une enveloppe (2') perméable à la diffusion de la vapeur.

3. Corps accumulateur à chaleur latente (1, 17, 28, 30, 31, 32) selon la revendication 1, **caractérisé en ce que** le corps accumulateur de chaleur latente (1, 17, 28, 30, 31, 32) est logé dans une enveloppe (2) imperméable à la diffusion de la vapeur.

4. Corps accumulateur à chaleur latente (1, 17, 28, 30, 31, 32) selon l'une des revendications précédentes, **caractérisé en ce que** le matériau hygroscopique (7) est logé dans une enveloppe perméable à la diffusion de la vapeur.

5. Corps accumulateur à chaleur latente (1, 17, 28, 30, 31, 32) selon l'une des revendications précédentes, **caractérisé en ce que** le matériau accumulateur de chaleur latente (6) présente des espaces capillaires ouvrant des voies vers le matériau hygroscopique (7).

6. Corps accumulateur à chaleur latente (1, 17, 28, 30, 31, 32) selon l'une des revendications précédentes, **caractérisé en ce que** le matériau hygroscopique (7) est disposé de façon répartie dans le corps accumulateur de chaleur latente (1, 17, 28, 30, 31, 32).

7. Corps accumulateur à chaleur latente (1, 17, 28, 30, 31, 32) selon l'une des revendications précédentes, **caractérisé en ce que** la proportion massique en matériau hygroscopique (7) dans le corps accumulateur de chaleur latente (1, 17, 28, 30, 31, 32) est de 5 % ou moins.

8. Corps accumulateur à chaleur latente (1, 17, 28, 30, 31, 32) selon l'une des revendications précédentes, **caractérisé en ce que** le corps accumulateur de chaleur latente (1, 17, 28, 30, 31, 32) contient du matériau hygroscopique (7) ayant une efficacité différente.

9. Corps accumulateur à chaleur latente (1, 17, 28, 30, 31, 32) selon l'une des revendications précédentes, **caractérisé en ce que** le corps accumulateur de chaleur latente contient une pluralité de corps individuels de matériau support (5).

10. Corps accumulateur à chaleur latente (1, 17, 28, 30, 31, 32) selon la revendication 9, **caractérisé en ce que** le corps individuel de matériau support (5) présente une forme en plaque ou en grain.

11. Corps accumulateur à chaleur latente (1, 17, 28, 30, 31, 32) selon l'une des revendications précédentes, **caractérisé en ce que** le matériau hygroscopique (7) est conformé en grain ou en granulat.

12. Corps accumulateur à chaleur latente (1, 17, 28, 30, 31, 32) selon l'une des revendications 1 à 11, **caractérisé en ce que** le matériau hygroscopique (7) est réalisé sous la forme de poudre.

13. Corps accumulateur à chaleur latente (1, 17, 28, 30, 31, 32) selon l'une des revendications précédentes, **caractérisé en ce que** le matériau hygroscopique (7) est disposé sur un corps individuel de matériau support (5).

14. Corps accumulateur à chaleur latente (1, 17, 28, 30, 31, 32) selon l'une des revendications 9 à 13, **caractérisé en ce que** le corps individuel de matériau support (5) et l'enveloppe (2, 2') sont espacés vis-à-vis d'une enceinte contenant un gaz.

15. Corps accumulateur à chaleur latente (1, 17, 28, 30, 31, 32) selon l'une des revendications précédentes, **caractérisé en ce que**, dans le corps accumulateur de chaleur latente 1, 17, 28, 30, 31, 32), un corps distributeur (24) s'étend, sur une surface et/ou dans un volume, le corps distributeur présentant des espaces capillaires ouvrant des voies vers le matériau hygroscopique (7).

16. Corps accumulateur à chaleur latente (1, 17, 28, 30, 31, 32) selon l'une des revendications 1 à 15, **caractérisé en ce que** du matériau hygroscopique (7) est disposé sur le corps distributeur (24).

17. Corps accumulateur à chaleur latente (1, 17, 28, 30, 31, 32) selon la revendication 16, **caractérisé en ce que** le corps distributeur (24) est réalisé en un matériau hygroscopique (7).

18. Corps accumulateur à chaleur latente (1, 17, 28, 30, 31, 32) selon l'une des revendications 2 à 17, **caractérisé en ce que** l'enveloppe (2, 2') du corps accumulateur de chaleur latente 1, 17, 28, 30, 31, 32) présente une ouverture (18) obturable.

19. Corps accumulateur à chaleur latente (1, 17, 28, 30, 31, 32) selon la revendication 18, **caractérisé en ce que** le corps distributeur (24) s'étend dans le corps accumulateur de chaleur latente 1, 17, 28, 30, 31, 32) en partant de l'ouverture (18) obturable de l'enveloppe (2, 2').

20. Corps accumulateur à chaleur latente (1, 17, 28, 30, 31, 32) selon l'une des revendications précédentes, **caractérisé en ce que** le matériau accumulateur de chaleur latente (6) contient un additif augmentant la viscosité.

21. Procédé de fabrication d'un corps accumulateur de chaleur latente (1, 17, 28, 30, 31, 32) contenant un matériau hygroscopique, avec un matériau accumulateur de chaleur latente (6) à base de paraffine, logé dans le matériau support présentant des espaces de logement, procédé dans lequel le matériau accumulateur de chaleur latente (6) est liquéfié et est amené sous forme liquéfiée à des espaces de logement du genre capillaires auto-aspirants, du matériau support, **caractérisé en ce que** le matériau accumulateur de chaleur latente (6) liquéfié est amené à une pluralité de corps individuels de matériau support (5) d'un corps accumulateur de chaleur latente (1, 17, 28, 30, 31, 32).

22. Procédé selon la revendication 21, **caractérisé en ce que** le matériau hygroscopique (7) est accumulé sur une surface de matériau support.

23. Procédé selon la revendication 22, **caractérisé en ce que** le matériau hygroscopique (7) est accumulé sur la surface du matériau support, après que le matériau accumulateur de chaleur latente (6) liquéfié ait été amené aux espaces de logement, du genre capillaires, auto-aspirants du matériau support.

24. Procédé selon la revendication 21, **caractérisé en ce que** l'on utilise un matériau hygroscopique (7) du genre de grain et/ou de granulat et/ou de poudre et/ou de flocons.

25. Procédé selon l'une des revendications 21 à 24, **caractérisé en ce qu'**on utilise comme matériau support un matériau du type grain et/ou granulat et/ou flocons.

26. Procédé selon l'une des revendications 21 à 25, **caractérisé en ce qu'**on utilise comme matériau support une nappe ou matelas de fibres.

27. Procédé selon l'une ou plusieurs des revendications 21 à 26, **caractérisé** en ce le matériau support est utilisé sous une configuration en plaque.

28. Procédé selon le préambule de la revendication 21, **caractérisé en ce qu'**on accumule un matériau hygroscopique (7) sur une surface du matériau support.

29. Procédé selon la revendication 28, **caractérisé en ce que** l'accumulation sur la surface du matériau support s'effectue après que le matériau accumulateur de chaleur latente (6) liquéfié ait été amené aux espaces de logement du genre capillaire, auto-aspirants, du matériau support.

30. Procédé selon l'une des revendications 28 ou 29, **caractérisé en ce qu'**on utilise un matériau hygroscopique (7) du genre grains et/ou granulat et/ou poudre et/ou flocons.

31. Procédé selon l'une des revendications 28 à 30, **caractérisé en ce qu'**on utilise comme matériau support un matériau du genre grains et/ou granulat et/ou flocons.

32. Procédé selon l'une des revendications 28 à 31, **caractérisé en ce qu'**on utilise comme matériau support un matelas ou nappe de fibres.

33. Procédé selon l'une des revendications 28 à 32, **caractérisé** en ce le matériau support est utilisé sous une configuration en plaque.
